# EUROPEAN PATENT APPLICATION

(11) **EP 4 614 426 A1**
(43) Date of publication of application: **10.09.2025**
(21) Application number: 23885653.8
(22) Date of filing: 26.10.2023
(51) Int. Cl.: G06Q 50/10

(54) **RECOVERED CARBON DIOXIDE AMOUNT MANAGEMENT SYSTEM**

(30) Priority: 01.11.2022 JP 2022175823
(71) Applicant: Revcell Co., Ltd., Yokohama-shi, Kanagawa 224-0001 (JP)
(72) Inventor: YAMAMOTO, Kenji, Yokohama-shi, Kanagawa 224-0001 (JP)
(74) Representative: Osterhoff, Utz
(86) International application number: PCT/JP2023/038791
(87) International publication number: WO 2024/095897

(57) **Abstract**

The management system for captured amount of carbon dioxide includes a wrapper wrapping an absorbing material which absorbs carbon dioxide; an information storage unit, and a first information terminal transmitting an absorbable capacity read by a reading unit in associated with the identification information of the first user. The information storage unit is disposed at a position where it is unreadable by the reading unit when the inside of the wrapper is sealed, and it is readable by the reading unit when the wrapper is unsealed. The server device stores the absorbable capacity received from the first information terminal in a database as a captured amount of carbon dioxide by the first user.

## Description

### TECHNICAL FIELD

The present invention relates to a management system for captured amount of carbon dioxide.

### BACKGROUND

In recent years, environmental protection activities have been carried out socially. In particular, efforts are being made by corporations and public organizations to reduce carbon dioxide emissions, which are thought to be a cause of global warming.

For example, JP-A-2015-219542 discloses an apparatus for evaluating reduced CO2 emission amount. The apparatus identifies a primary factor from activity items based on primary factor information stored in a primary factor identification DB. Then, the apparatus calculates the CO2 emission amount related to the primary factor based on the CO2 emission intensity unit stored in the CO2 emission factor DB. In this way, it is possible to evaluate the reduced CO2 emission amount through the introduction of ICT solutions.

### [Conventional Art Documents]

### [Patent Document]

[Patent Document 1] JP-A- 2015-219542

### SUMMARY OF THE INVENTION

### [Problem to be solved by the invention]

Nowadays, society is aiming to become carbon neutral, the state to eliminate the impact of carbon dioxide on the global environment by making the captured amount of carbon dioxide equal to the emission amount of carbon dioxide. On this point, a system as disclosed in JP-A-2015-219542 is a desired one which is capable of managing not only the emission amount but also the captured amount of carbon dioxide. Herein, the term "capture" means that carbon dioxide is not discharged into the atmosphere, for example, by absorbing carbon dioxide in an absorbing material.

Accordingly, from the viewpoint of managing a captured amount of carbon dioxide of a user, the inventor of the present application started to develop a system in which the user transmits information of an absorbing material to a server device and the server device stores data of a captured amount of carbon dioxide based on the information of the absorbing material. However, the inventor of the present application has discovered that in the case where a user transmits information of an absorbing material to a server device without making the absorbing material to absorb carbon dioxide, the server device would wrongly store the amount of the carbon dioxide captured by the user based on the transmitted information of the absorbing material. As a result, such a system causes problems that a malicious user receives some profits such as an emission credit when some profits (e.g., emission credits) are given to the user based on the captured amount of carbon dioxide. Further, the inventor of the present application has discovered the problem that, in the case where an absorbing material is provided to a user, once the absorbing material captured carbon dioxide before reaching the user, it is difficult to accurately grasp the amount of carbon dioxide captured after the absorbing material reaches the user's hand. In this case, the captured amount of carbon dioxide stored in the server device is larger than the amount of carbon dioxide actually absorbed by the absorbing material by the user.

The present disclosure has been made to solve the above-described problems. An object of the present disclosure is to provide a management system for captured amount of carbon dioxide, the system capable of preventing the captured amount of carbon dioxide from being stored at an incorrect value.

### [Means for solving the problem]

In order to achieve the above object, there is disclosed, according to a first embodiment of the present disclosure, a management system for captured amount of carbon dioxide provided with a server device storing a captured amount of carbon dioxide by a user, the system comprises: an absorbing material which absorbs carbon dioxide in air; a wrapper which is provided with an absorbing material therein and is sealed so that air outside the absorbing material does not come into contact with the absorbing material; an information storage unit which is disposed inside the wrapper and contains an absorbable capacity which is an amount of carbon dioxide absorbable by the absorbing material; and a first information terminal including a reading unit reading an absorbable capacity from the information storage unit, and a transmitting unit transmitting the absorbable capacity read by the reading unit in associated with the identification information of the first user; wherein the information storage unit is disposed at a position where it is unreadable by the reading unit when the inside of the wrapper is sealed, and it is readable by the reading unit when the wrapper is unsealed; and the server device stores an absorbable capacity received from the first information terminal as a captured amount of carbon dioxide by the first user.

There is disclosed, according to a second embodiment of the present disclosure, a management system for captured amount of carbon dioxide provided with a server device storing a captured amount of carbon dioxide by a user, the system comprises: an absorbing material which absorbs carbon dioxide in air; a wrapper which is provided with an absorbing material therein and is sealed so that air outside the absorbing material does not come into contact with the absorbing material; an information storage unit which is disposed inside the wrapper and contains an identification information of the absorbing material; and a first information terminal including a reading unit reading the identification information read by the reading unit, and a transmitting unit transmitting the absorbable capacity read by the reading unit in associated with the identification information of the first user; wherein the information storage unit is disposed at a position where it is unreadable by the reading unit when the inside of the wrapper is sealed, and it is readable by the reading unit when the wrapper is unsealed; and the server device, referring to an absorbable capacity database in which the identification information of the absorbing material is associated with the absorbable capacity which is an amount of carbon dioxide absorbable by the absorbing material, reads an absorbable capacity associated with the identification information of the absorbing material received from the first information terminal and stores the absorbable capacity received as a captured amount of carbon dioxide by the first user.

### Effect of the Invention

According to the above configurations, since the absorbing material is sealed with the wrapper so as not to expose the outside air, absorption of carbon dioxide by the absorbing material can be avoided until the absorbing material reaches the user's hand. Thus, it is possible to regard the whole absorbable capacity of carbon dioxide received from the first information terminal as the captured amount of carbon dioxide absorbed after the user's hand. As a result, the captured amount of carbon dioxide stored in the server device can be prevented from becoming larger than the amount of carbon dioxide actually absorbed with the absorbing material by the user. Further, the information storage unit is disposed at a position where it is unreadable by the reading unit when the inside of the wrapper is sealed, and it is readable by the reading unit when the wrapper is unsealed, so that it is possible to prevent information (absorbable capacity or identification information of the absorbing material) from being fraudulently read out from the information storage unit in a state where the inside of the wrapper is sealed (i.e., the state where the absorbing material does not absorb carbon dioxide). As a result, it is possible to avoid transmission of the information fraudulently read from the information storage unit to the server device despite that the user does not make the absorbing material to absorb carbon dioxide. Therefore, the captured amount of carbon dioxide is prevented from being stored at an incorrect value.

### BRIEF DESCRIPTION OF THE DRAWING

Fig. 1 is a block diagram for illustrating an outline of a management system 100 for captured amount of carbon dioxide according to a first embodiment.
Fig. 2 is a diagram for illustrating an absorption unit 80 according to the first embodiment before and after unsealing.
Fig. 3 is a block diagram showing a configuration of a system 100 according to the first embodiment.
Fig. 4 is a block diagram of a first capturer terminal 20 and an air purifier 60.
Fig. 5 is a cross-sectional view showing a configuration of the air purifier 60.
Fig. 6 is a diagram (1) of a screen example displayed on a display unit 23 of the first capturer terminal 20.
Fig. 7 is a diagram (1) showing exemplary data stored in a database 12b.
Fig. 8 is a diagram (2) of a screen example displayed on the display unit 23 of the first capturer terminal 20.
Fig. 9 is a diagram (3) of a screen example displayed on the display unit 23 of the first capturer terminal 20.
Fig. 10 is a diagram (4) of a screen example displayed on the display unit 23 of the first capturer terminal 20.
Fig. 11 is a diagram (5) of a screen example displayed on the display unit 23 of the first capturer terminal 20.
Fig. 12 is a diagram (6) of a screen example displayed on the display unit 23 of the first capturer terminal 20.
Fig. 13 is a diagram (7) of a screen example displayed on the display unit 23 of the first capturer terminal 20.
Fig. 14 is a diagram (1) of a screen example displayed on the display unit 23 of the first capturer terminal 20 and a screen example displayed on a notification unit 64 of the air purifier 60.
Fig. 15 is a diagram for showing a relationship between an air volume and a coefficient.
Fig. 16 is a diagram (2) of a screen example displayed on the display unit 23 of the first capturer terminal 20 and a screen example displayed on the notification unit 64 of the air purifier 60.
Fig. 17 is a block diagram showing a configuration of a second capturer terminal 120.
Fig. 18 is a diagram (1) of a screen example displayed on the display unit 123 of the second capturer terminal 120.
Fig. 19 is a diagram (2) of a screen example displayed on the display unit 123 of the second capturer terminal 120.
Fig. 20 is a block diagram showing a configuration of an intermediate holder terminal 30.
Fig. 21 is a block diagram showing a configuration of a storage-reuser terminal 40.
Fig. 22 is a block diagram showing a configuration of an administrator terminal 50.
Fig. 23 is a diagram (2) showing an exemplary information stored in a database 12b.
Fig. 24 is a diagram (2) showing an exemplary information stored in the database 12b.
Fig. 25A is a diagram (2) showing an exemplary information stored in the database 12b.
Fig. 25B is a diagram (2) showing an exemplary information stored in the database 12b.
Fig. 26 is a diagram (2) showing an exemplary information stored in the database 12b.
Fig. 27 is a diagram of a screen example displayed on a display unit 23 of a storage-reuser terminal 40.
Fig. 28 is a diagram (3) showing an exemplary information stored in the database 12b.
Fig. 29 is a diagram showing a configuration of a management system 200 for captured amount of carbon dioxide according to a second embodiment.
Fig. 30 is a diagram showing an exemplary information stored in the database 212b.
Fig. 31 is a diagram of a screen example displayed on a first capturer terminal 220.
Fig. 32 is a diagram showing a configuration of a management system 400 for captured amount of carbon dioxide according to a first modified example of the second embodiment.
Fig. 33 is a block diagram of a first capturer terminal 420 according to the first modified example of the second embodiment.
Fig. 34 is a diagram showing a part of a configuration of a management system 600 for captured amount of carbon dioxide according to a third embodiment.
Fig. 35 is a cross-sectional view of an air purifier 660 according to the third embodiment.
Fig. 36 is a diagram showing a screen example displayed on a display unit 664 according to the third embodiment.
Fig. 37 is a diagram for describing that data in a state in which the predicted period and the air volume are associated with the number of days until the capture deadline according to a second modified example of the first and second embodiments.
Fig. 38 is a diagram of a screen example displayed on the first capturer terminal 720 according to a third modified example of the first and second embodiments.

### DETAILED DESCRIPTION

Hereinafter, embodiments of the present disclosure will be described with reference to the drawings. It should be noted that the present disclosure is not limited to the following embodiments, and it is possible to appropriately change the design within a range satisfying the configuration of the present disclosure. In the following description, the same reference numerals are used for the same portions or parts having the same functions among the different drawings, and repeated description thereof will be omitted. In addition, the configurations described in the embodiments and the modifications may be appropriately combined or changed. Further, for the sake of clarity of explanation, in the drawings referred to below, the configuration is illustrated in a simplified or schematic manner, or some of the constituent materials are omitted.

### [First Embodiment]

### General Configuration of Management System for Captured Amount of Carbon Dioxide)

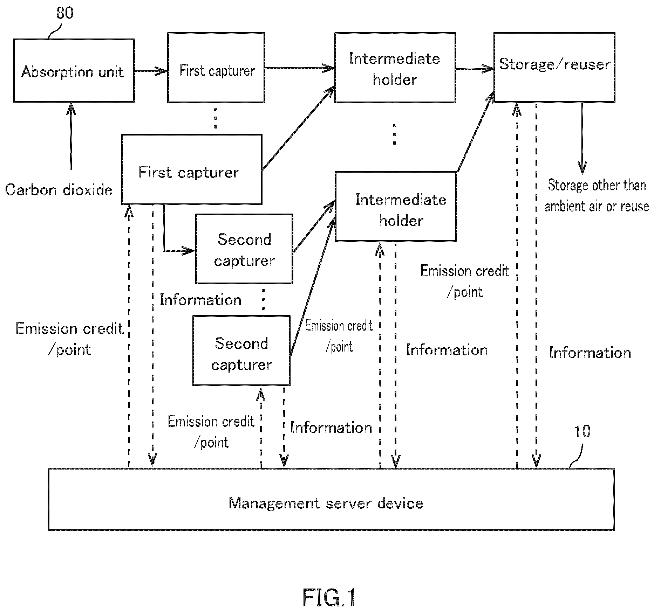

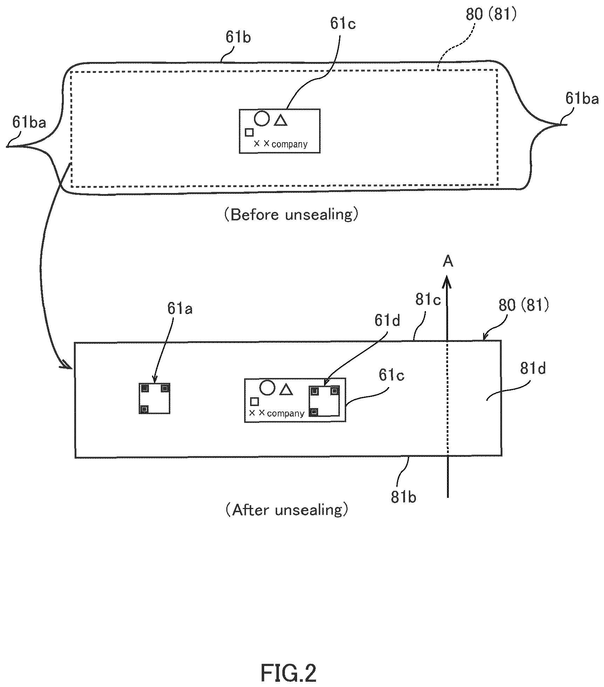

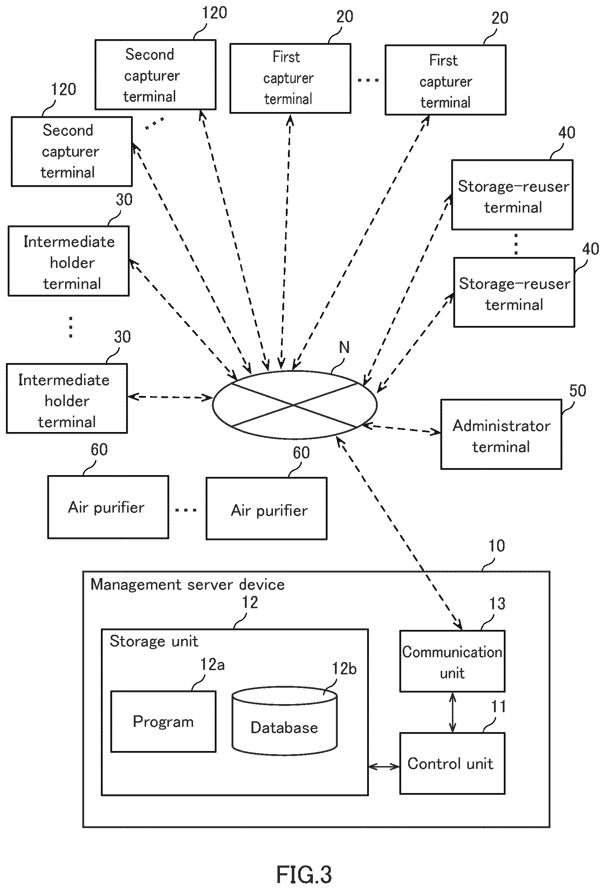

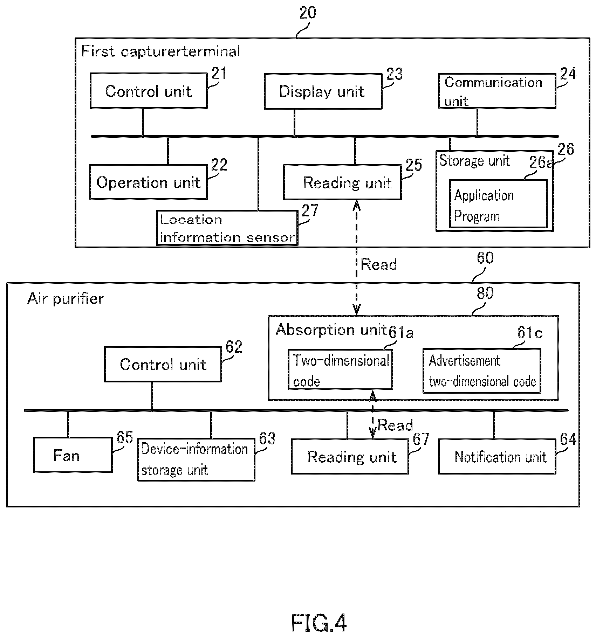

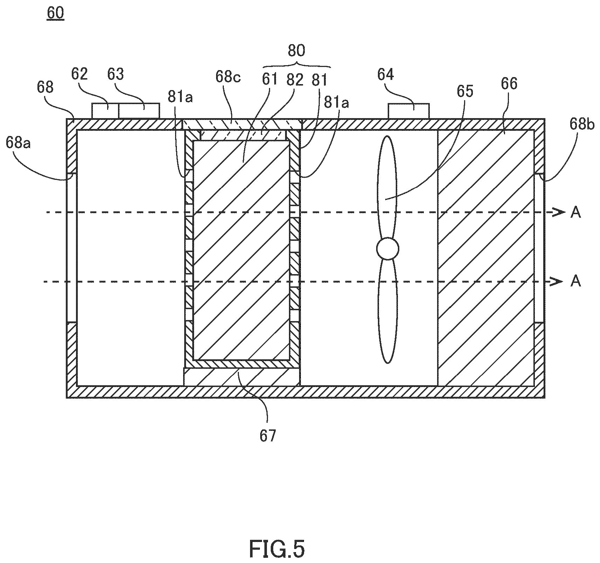

Fig. 1 is a block diagram illustrating a configuration of a management system 100 for captured amount of carbon dioxide (hereinafter, referred to as "system 100") according to a first embodiment. Fig. 2 is a diagram for explaining an absorption unit 80 according to a first embodiment in a state before unsealing and in a state after unsealing. Fig. 3 is a block diagram showing a configuration of the system 100 according to the first embodiment. Fig. 4 is a block diagram of a first capturer terminal 20 and an air purifier 60. Fig. 5 is a cross-sectional view illustrating a configuration of the air purifier 60.

As shown in Fig. 1, the system 100 is a system in which carbon dioxide is captured (removed) from at least one of emitted air (from a human, animal, or equipment, and a natural environment) or atmospheric air with an absorption unit 80 and the captured amount of carbon dioxide is managed by the system. Where carbon dioxide in the air emitted from a human is captured, for example, available capturing places may include a private house, a company office, a restaurant, a sports club, a commercial facility, an automobile inner space, a train inner space, an airplane inner space, a ship inner space, or the like. Where carbon dioxide in the air emitted from an animal is captured, for example, available capturing places may include a barn, a pet shop, a poultry farm, a pig farm, or the like. Where carbon dioxide in the air emitted from equipment is captured, for example, available capturing places may include a thermal power plant, a manufacturing factory, an exhaust gas from an automobile, an incinerator, or the like. Further, available capturing places for carbon dioxide in the air may include volcanoes or hot springs where carbon dioxide is emitted from the natural environment. Furthermore, carbon dioxide may be captured from the atmosphere.

As shown in Fig. 2, the absorption unit 80 is sealed with a wrapper 61b. That is, the absorption unit 80 is covered with the wrapper 61b so that the air outside the wrapper 61b does not come into contact with the absorption unit 80 (the absorbing material 61). The wrapper 61b is configured, for example, in a bag shape. The wrapper 61b is formed of, for example, a film without air permeability (for example, a resinous film), and an end 61da thereof is sealed. Thus, for example, it is possible to prevent the absorption of carbon dioxide by the absorption unit 80 during transportation of the absorption unit 80 from the place where the absorption unit 80 is manufactured to the place of a user (hereinafter, referred to as "first capturer") who starts the absorption of carbon dioxide using the absorption unit 80. In addition, an advertisement 61c is disposed on the outer surface of the wrapper 61b. For example, an advertiser of the advertisement 61c may bear a part or all of the manufacturing cost of the absorption unit 80, or the advertisement cost from the advertiser may be provided to a seller of the absorbing material 61. As a result, the first capturer can reduce the purchase cost of the absorbing material 61 and, in some cases, make the price of the absorbing material 61 free of charge.

The absorbing material 61 is, for example, a material containing calcium hydroxide and being capable of absorbing carbon dioxide by a chemical reaction. That is, the absorbing material 61 is a material that chemically reacts with the carbon dioxide in the air by exposure to the air and removes the carbon dioxide in the air. Incidentally, the absorbing material 61 is not limited to this example, and may be a porous material represented by a mineral-based material such as zeolite, a hollow fiber membrane, or other materials capable of absorbing and/or adsorbing carbon dioxide. It should be noted that the material that absorbs carbon dioxide by a chemical reaction can capture carbon dioxide in the form of a solid (powder), and thus can capture and store carbon dioxide more efficiently than the one used for other methods.

Further, the absorbing material 61 contains a dye such as methyl violet, and is configured such that the color changes in accordance with the absorbed amount of carbon dioxide. For example, the absorbing material 61 changes in color from "white" to "red, purple, or pink" when absorbing carbon dioxide. Alternatively, the absorbing material 61 may comprise a material whose color changes from "red or purple" to "white or pink" when absorbing carbon dioxide, or a material whose color changes to a color other than described above.

Then, as shown in Fig. 2, a two-dimensional code 61a and an advertising two-dimensional code 61d are attached to the absorbing unit 80. That is, the two-dimensional code 61a and the advertising two-dimensional code 61d are disposed inside the wrapper 61b. The two-dimensional code 61a and the advertising two-dimensional code 61d are, for example, QR (trademark) codes. It should be noted that although the above example comprises the absorbing unit 80 provided with the two-dimensional code 61a and the advertising two-dimensional code 61d, it is also possible that a one-dimensional code (bar code) may be provided in place of the two-dimensional code 61a and the advertising two-dimensional code 61d, or an electric circuit capable of storing information, such as a IC chip, may be provided in place of the two-dimensional code 61a and the advertising two-dimensional code 61d.

When the wrapper 61b comprises an opaque material, the two-dimensional code 61a and the advertising two-dimensional code 61d cannot be optically detected by a reading unit 25 in the state where the inside of the wrapper 61b is sealed. Further, when IC chip is provided in the absorbing unit 80, radio waves cannot be transmitted and received between the reading unit 25 and the IC chip in the state where the inside of the wrapper 61b is sealed because the wrapper 61b comprises a conductor. That is, in the first embodiment, the two-dimensional code 61a and the advertising two-dimensional code 61d are disposed at a position where they are unreadable by the reading unit 25 when the inside of the wrapper 61b is sealed, and they are readable by the reading unit 25 when the wrapper 61b is unsealed.

Further, the two-dimensional code 61a and the advertising two-dimensional code 61d are, referring to a casing 81 of the absorption unit 80, disposed (attached) on the side 81d without a vent hole 81a in the absorption unit 80 (see Fig. 5), not disposed on the front 81b and the rear 81c both of which are provided with vent hole 81a (see Fig. 5). Thus, the two-dimensional code 61a and the advertising two-dimensional code 61d do not adversely interfere with ventilation.

The two-dimensional code 61a contains an absorbable capacity, which is an amount of carbon dioxide that can be absorbed by the absorbing material 61, and a predicted period until the absorbing material 61 is saturated. The advertising two-dimensional code 61d contains an advertiser's ID (hereinafter referred to as "advertising ID").

Here, the first capturer unseals the wrapper 61b to start absorption of carbon dioxide by the absorption unit 80 (absorbing material 61). For example, the first capturer unseals the sealing portion 61ba of the wrapper 61b and takes the absorption unit 80 out to the outer side of the wrapper 61b. The first capturer places the absorption unit 80 on the ground (floor), a table, or the like for the unit 80 to absorb carbon dioxide while leaving, or disposes the absorption unit 80 in the air purifier 60 (see Fig. 5) for absorption of carbon dioxide in the air passing through the air purifier 60.

In addition, the absorption unit 80 that has absorbed carbon dioxide is transferred from the first capturer to a second capturer, who delivers the absorption unit 80 to an intermediate holder, a storager, and a reuser. The "first capturer" and the "second capturer" may be an individual who uses the air purifier 60, a businessperson who manages the air purifier 60, or a public organization (such as a municipality, a national government, an international organization, and a school) who manages the air purifier 60. As for a "second capturer", an "intermediate holder", a "storager", or a "reuser", all of which will be described later, may act as the "second capturer". Incidentally, the "first capturer" is a "first user" who uses the system 100, and the "second capturer", the "intermediate holder", the "storager", and the "reuser" are "second users" who uses the system 100.

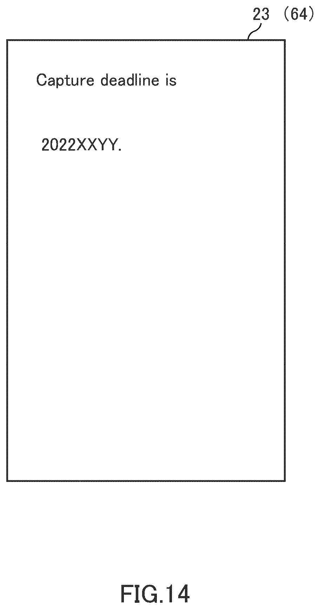

Further, in the first embodiment, the first capturer checks the display unit 23 of the first capturer terminal 20 (see Fig. 14), and replaces the absorption unit 80 after the later-described "capture deadline". Where the absorption unit 80 is disposed on the floor or the like, in the "replacement", the first capturer delivers the absorption unit 80 to the second capturer, unseals a wrapper 61b in which a new absorption unit 80 is wrapped, and places the new absorption unit 80 on the floor or the like. When the absorption unit 80 is disposed in the air purifier 60, in the "replacement", the first capturer takes out the absorption unit 80 from the inside of the air purifier 60 and delivers it to the second capturer, and the first capturer unseals a wrapper 61b in which a new absorption unit 80 is wrapped and has not absorbed carbon dioxide yet, as shown in Fig. 3, and disposes the new absorption unit 80 in the air purifier 60. Incidentally, the first capturer may replace the absorption unit 80 before the "capture deadline".

The management server device 10 shown in Fig. 3 obtains an absorbable capacity of the absorption unit 80 associated with the user **ID** of the first capturer from the first capturer terminal 20, and stores the absorbable capacity in the database 12b as the captured amount of carbon dioxide. Then, the management server device 10 gives the first capturer an emission credit and points based on the captured amount of carbon dioxide. The "Emission Credit" is the emission amount of carbon dioxide permitted by a national government or an international agency. The first capturer needs to acquire "emission credits" from others if its carbon dioxide emissions exceed the emission credits it owns. The "point", which is other than the "emission credit", indicates a numerical value that is profitable to a given person. For example, the "point" may have the same value as the currency of the country where the person acquiring the point belongs to, or may enhance a preferential treatment of a predetermined service (for example, lower amount of public utility charges and lower medical burden) or may reduce a tax rate depending on the amount of the points. The "information obtained from the first capturer terminal 20" includes, for example, a user ID of the first capturer, an ID of the absorbing material 61, an absorbable capacity of carbon dioxide of the absorbing material 61, a predicted period until the absorbing material 61 is saturated, or a capture deadline. The "information obtained from the first capturer terminal 20" may further include information such as the weight of the absorbing material 61, the content components, the name of the manufacturing factory, the name of the manufacturing company, the date of manufacture, and the sampling location of the raw material. Where an advertisement 61c is attached to the absorbing unit 80, the "information obtained from the first capturer terminal 20" includes information such as an advertiser name and an advertisement rank (an allocation ratio of an emission credit or points with the first capturer, etc.). These data are associated with each other in the below-described database 12b.

The second capturer delivers the absorption unit 80 (carbon dioxide) collected from the first capturer to the intermediate holder, the storager or the reuser. In addition, in a case where the absorbing material 61 of the absorption unit 80 collected from the first capturer has not been saturated yet, the second capturer may make the absorbing material 61 to further absorb carbon dioxide, thereby bringing the absorbing material 61 into a saturated state. The term "saturated" means a state in which the amount of carbon dioxide absorbed by the absorbing material 61 has almost reached the absorbable capacity (for example, the amount of carbon dioxide absorbed has reached 80% or more of the absorbable capacity). It should be noted that the criterion of "saturation" exemplified as 80% is not limited to 80%. Also, the criterion of "saturation" may be set to different values depending on, for example, applications in which the absorbing material 61 is stored or reused. Further, where the later-described storage-reuse period is not taken into consideration, it is possible to treat, as saturated state, the state where the wrapper 61b is unsealed to pass the time exceeding the later-described predicted period or the capture deadline (the absorbing material 61 may be stored or reused as the "saturated" state).

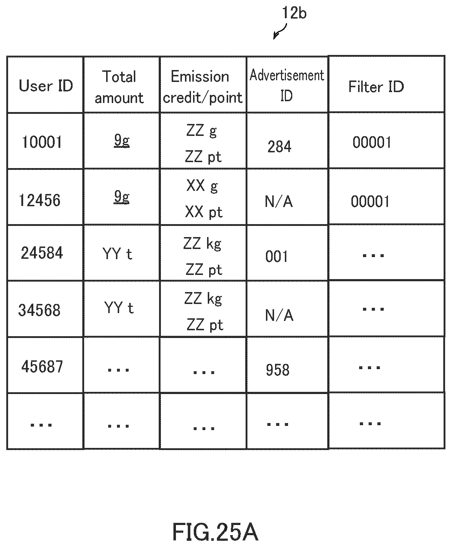

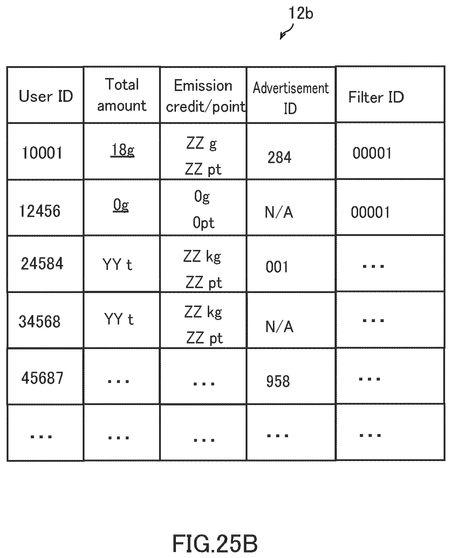

An "intermediate holder" is a municipality, a national government, an international organization, or a private entity which temporarily holds the absorption unit 80 (carbon dioxide) collected from a plurality of second capturers until it is delivered to a storager or a reuser. For example, examples of the holding location by the intermediate holder include a garbage collection, a garbage incinerator, a convenience store, a post office, a commercial facility, a gas station, a warehouse of a delivery company or the like, and a public facility, or others. The management server device 10 obtains the absorbable capacity of the absorption unit 80 from an intermediate holder terminal 30, the absorption unit which is held by the intermediate holder who is associated with the user ID of the intermediate holder, and stores the absorbable capacity in the database 12b as the intermediate holding amount of carbon dioxide (added to the "total amount" in Fig. 25A). Then, the management server device 10 assigns an emission credit and a point based on the intermediate holding amount of carbon dioxide to the intermediate holder.

The intermediate holder delivers the plurality of absorption units 80 (carbon dioxide) collected from the plurality of second capturers to a storager or a reuser. Further, the absorption unit 80 (carbon dioxide) held by the intermediate holder may be collected by the storager himself/herself or by the reuser himself/herself. Alternatively or additionally, there may be a third capturer who delivers from the intermediate holder to the storager or the reuser. The storager stores the absorbing material 61 (carbon dioxide) of the absorption unit 80 in a place other than the atmosphere, the absorbing material Which is collected from the plurality of intermediate holders or the plurality of second capturers. The storager may store the absorbing material 61 of the absorption unit 80 itself in the place other than the atmosphere, or may extract carbon dioxide from the absorbing material 61 and store the carbon dioxide in a place other than the atmosphere. It should be noted that the storager stores the absorbing material 61 after a storage-reuse time as described later. In this way, it is possible to prevent the absorbing material 61 from being stored in an unsaturated state. Examples of storage locations include underground, underwater (under sea), and space. The "storager" is a person who stores the captured carbon dioxide in a place other than the atmosphere, and the storager is, for example, a municipality, a national government, an international organization, or an enterprise or others. The management server device 10 obtains, from a storage-reuser terminal 40, an absorbable capacity of the absorption unit 80 which is stored by the storager associated with the user ID, and stores the absorbable capacity in the database 12b as the amount of carbon dioxide which is stored and reusable (added to the "total amount" in Fig. 25A). Then, the management server device 10 gives the storager an emission credit and a point based on the storage-reusable amount of carbon dioxide.

The reuser is a person who reuses the absorbing materials 61 of the absorption units 80 collected from the plurality of intermediate holders or the plurality of second capturers. For example, when the saturated absorbing material 61 is calcium carbonate, the reuser manufactures a glass product or concrete from the absorbing material 61. A "reuser" is, for example, a municipality, a national government, an international organization, or an enterprise (e.g., a manufacturer) or others. The management server device 10 obtains, from the storage-reuser terminal 40, an absorbable capacity of the absorption unit 80 which is reused by a reuser associated with the user ID, and stores the absorbable capacity in the database 12b as the storage-reusable amount of carbon dioxide (added to the "total amount" in Fig. 25A). Then, the management server device 10 gives a reuser an emission credit and a point based on the storage-reusable amount of carbon dioxide.

According to the above configuration, it is possible to manage each of the captured amount, the intermediate holding amount, and the storage-reusable amount of carbon dioxide, and to manage the emission credits and the points related to the captured amount, the intermediate holding amount, and the storage-reusable amount. Further, since the absorbing material 61 reaches the first capturer in the state where the absorbing material 61 is sealed with the wrapper 61b so as not to be exposed to the outside air, the absorption of carbon dioxide by the absorbing material 61 can be prevented. Thus, the absorbable capacity received from the first capturer terminal 20 matches the captured amount of carbon dioxide absorbed after being delivered to the first capturer, so that the absorbable capacity can be regarded as the amount of carbon dioxide captured by the first capturer. As a result, it is possible to prevent the captured amount of carbon dioxide stored in the management server device 10 from being fraudulently larger than the amount of carbon dioxide actually absorbed in the absorbing material 61 carried out by the first capturer.

Further, the two-dimensional code 61a is disposed at a unreadable position by the first capturer terminal 20 in a state where the inside of the wrapper 61b is sealed, and at a readable position by the first capturer terminal 20 in a state where the wrapper 61b is unsealed, so that it is possible to prevent the absorbable capacity from being fraudulently read out from the two-dimensional code 61a in a state where the inside of the wrapper 61b is sealed (a state where the absorbing material 61 does not absorb carbon dioxide). Consequently, without absorption of carbon dioxide in the absorbing material 61 by the first capturer, the transmission of the information fraudulently read from the two-dimensional code 61a to the management server device 10 is avoided. As a result, it is possible to prevent the captured amount of carbon dioxide from being recorded with incorrect values.

### Configuration of Each Part of the Management System of Captured Amount of Carbon Dioxide

As shown in Fig. 3, the management server device 10 is configured to be able to communicate with a plurality of first capturer terminals 20, a plurality of second capturer terminals 120, a plurality of intermediate holder terminals 30, a plurality of storage-reuser terminals 40, and an administrator terminal 50 via a network N. The network N is, for example, the Internet or a Local Area Network (LAN), but other networks may be used.

The management server device 10 is a device for managing the carbon dioxide captured amount, the carbon dioxide intermediate holding amount, the carbon dioxide storage-reusable amount, the emission credit and point of each of the plurality of first capturers, the emission credit and point of each of the plurality of second capturers, the emission credit and point of each of the plurality of intermediate holders, and the emission credit and point of each of the plurality of storagers. The management server device 10 may be an on-premises (stationary) server device or a server device configured on a cloud. The management server device 10 stores data such as the above-described captured amount of carbon dioxide and emission credit as having a data structure using distributed ledger art (for example, blockchain technology). As a result, it is possible to prevent tampering with data in the management server device 10. Incidentally, in a case where there is a low possibility that the data is tampered with, the management server device 10 may store each datum so as to have a data structure that does not use the distributed ledger art.

An application program for accessing the management server device 10 is installed in each of the plurality of first capturer terminals 20, the plurality of second capturer terminals 120, the plurality of intermediate holder terminals 30, the plurality of storage-reuser terminals 40, and the administrator terminal 50. The "administrator" is a local government, a national government, an international organization, or a private enterprise that manages the management server device 10. Each of the plurality of first capturer terminals 20, the plurality of second capturer terminals 120, the plurality of intermediate holder terminals 30, the plurality of storage-reuser terminals 40, and the plurality of administrator terminals 50 obtains information and images provided by the management server device 10 by accessing the management server device 10. It should be noted that the application software is not limited to the use of dedicated application software, and browser software (for example, a Web browser) may be installed in each of the plurality of first capturer terminals 20, the plurality of second capturer terminals 120, the plurality of intermediate holder terminals 30, the plurality of storage-reuser terminals 40, and the plurality of administrator terminals 50. In this case, information and images provided by the management server device 10 are displayed on the browser in each of the plurality of first capturer terminals 20, the plurality of second capturer terminals 120, the plurality of intermediate holder terminals 30, the plurality of storage-reuser terminals 40, and the plurality of administrator terminals 50.

As shown in Fig. 5, the absorbing material 61 is disposed in the air purifier 60. That is, the air purifier 60 according to the first embodiment is a carbon dioxide removal device. The air purifier 60 includes a control unit 62, a device-information storage unit 63, a notification unit 64, a fan 65, an air cleaning filter 66, a reading unit 67, and an absorption unit 80. The control unit 62 includes a processor that executes a control process by executing a program. Then, the control unit 62 executes each control process of the air purifier 60. The device-information storage unit 63 stores information on the amount of air passing through the absorption unit 80. The device-information storage unit 63 is configured as, for example, a two-dimensional code or a one-dimensional code, and is configured to providing data (air volume information) stored therein readable by the reading unit 25. The device-information storage unit 63 may be configured as an IC chip, or may be configured to providing data (information on air volume) stored in IC chip readable by the reading unit 25. The notification unit 64 is configured as, for example, a display, and displays a later-described capture deadline. The reading unit 67 is disposed at a position facing the two-dimensional code 61a of the absorption unit 80 with the absorption unit 80 disposed in the air-purifier 60. The reading unit 67 is configured to read data from the two-dimensional code 61a.

As shown in Fig. 5, the air purifier 60 includes a housing 68 that houses the absorbing material 61 and a fan 65. The housing 68 includes an intake port 68a for sucking air into the housing 68, and an exhaust port 68b for discharging air to the outside of the housing 68. In the first embodiment, the absorbing unit 80 (absorbing material 61), the fan 65, and the air cleaning filters 66 are disposed in this order from the intake port 68a toward the exhaust port 68b in the housing 68. Then, the fan 65 generates airflow A to allow the air to pass through the absorbing material 61 and the air cleaning filter 66. The device-information storage unit 63 is disposed outside the housing 68. The air-cleaning filter 66 is, for example, a HEPA filter. The air cleaning filter 66 is disposed in the ventilation path (for example, closer to the exhaust port 68b than the absorbing material 61 and the fan 65) of airflow A generated by driving the fan 65.

Further, as shown in Fig. 5, the absorption unit 80 includes a casing 81 for accommodating the absorbing material 61, and a window portion 82 provided on a side of the casing 81. The casing 81 is provided with a plurality of vent holes 81a allowing ventilation to the absorbing material 61. Further, the window portion 82 is made of a transparent material so that the absorbing material 61 can be visually recognized from the outside of the absorbing unit 80. In addition, the housing 68 is provided with a window portion 68c so that the absorbing material 61 can be visually recognized through the window portion 82. The window portion 68c is made of a transparent material that allows the absorbing material 61 to be visually recognized from the outside of the housing 68. Thus, even in a state in which the absorbing material 61 is disposed in the air purifier 60, the user can check the state (for example, color) of the absorbing material 61.

The housing 68 is configured to allow the absorption unit 80 to be attachable to and detachable from the air purifier 60. For example, a window 68c is configured to be detachable from the housing 68 so that the absorbing unit 80 can be removed to outside the air-purifier 60 through a portion at which the window 68c is detached. Incidentally, the attachment and detachment methods of the absorption unit 80 to and from the air purifier 60 are not limited to this embodiment, and the absorption unit 80 may be attached and detached while a part of the housing 68 other than the window portion 68c is open.

### Detailed Configuration of Each Information Terminal

The first capturer terminal 20 shown in Fig. 3 is an information terminal used by the first capturer. The second capturer terminal 120 is an information terminal used by the second capturer. The intermediate holder terminal 30 is an information terminal used by the intermediate holder. The plurality of storage-reuser terminals 40 are information terminals used by the storagers. The administrator terminal 50 is an information terminal used by the administrator. As the "information terminal", for example, a smartphone, a smartwatch, a personal computer, or a tablet terminal can be used.

### <Configuration of First Capturer Terminal 20>

Fig. 4 is a block diagram showing a configuration of the first capturer terminal 20. As illustrated in Fig. 4, the first capturer terminal 20 includes a control unit 21, an operation unit 22, a display unit 23, a communication unit 24, a reading unit 25, a storage unit 26, and a location information sensor 27. The control unit 21 includes a processor that executes a control process by executing a program. Then, the control unit 21 executes each control process of the first capturer terminal 20. The operation unit 22 is a user interface such as a keyboard, a mouse, or a touch panel. The display unit 23 is, for example, a liquid crystal display or an organic EL display. Where the display unit 23 is configured as a touch panel, the touch panel may also serve as the operation unit 22 and the display unit 23. The communication unit 24 is a communication interface and is connected to the network N.

The reading unit 25 is, for example, a camera that photographs the two-dimensional code 61a attached to the absorbing material 61, and the device-information storage unit 63. The reading unit 25 is not limited to this, and may include a two-dimensional code 61a as well as a light emitting unit that emits light to the device-information storage unit 63 and a light receiving unit that detects a reflected light. In addition, the reading unit 25 may be provided with a circuit reading data in IC chip. The storage unit 26 includes, for example, at least one of SSD (Solid State Drive) and HDD (Hard Disk Drive). The storage unit 26 stores an application program 26a. The location information sensor 27 is, for example, a GPS (Global Positioning System) sensor.

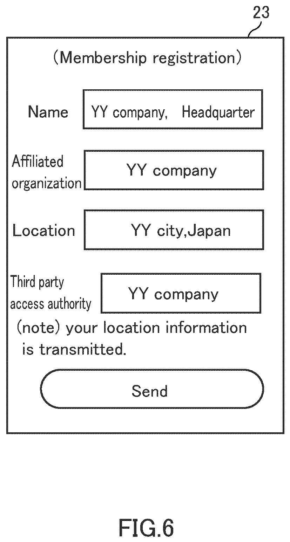

Fig. 6 is a diagram for explaining an example of a membership registration page (or registration screen) displayed on the display unit 23 of the first capturer terminal 20. As shown in Fig. 6, when the application program 26a is activated for the first time by the control unit 21, a membership registration page is displayed. The "member" is a user who has registered his or her name, his or her attribute, and the like in the management server device 10.

The display unit 23 displays a membership registration page for entering information on the name of the user himself/herself, information on the attributes of the user (the company, organization, location, and the like to which the user belongs), and information on third-party information acquisition authority. Then, the first capturer enters information to the first capturer terminal 20, and the entered information is transmitted from the first capturer terminal 20 to the management server device 10. Here, as described above, the first capturer may include an individual, an enterprise, or an arbitrary organization or association. In the case of the enterprise, the headquarters (management department) may want to check information on the captured result (captured amount) or the like by each branch office or each business office. Alternatively, there are cases in which an arbitrary organization or association, regardless of the enterprise, enlightens the measures against global warming and captures carbon dioxide, while confirming the captured amount by other parties. Therefore, the first capturer can request the management server device 10 to grant the third-party information acquisition authority to the first capturer by entering the information on the third-party information acquisition authority. Even in a state where the first capturer does not register as a member, the absorbing material 61 may be collected from the first capturer by the second capturer. The "third-party information acquisition authority" means a right for a third party to access (view) information associated with other user ID. The third party itself is allowed to access the information in the database 12b.

The "send" button is displayed on the first capturer terminal 20. When the "send" button is selected, the first capturer terminal 20 transmits, to the management server device 10, the information entered on the screen shown in Fig. 6, the identification information of the first capturer terminal 20, and the location information of the first capturer terminal 20.

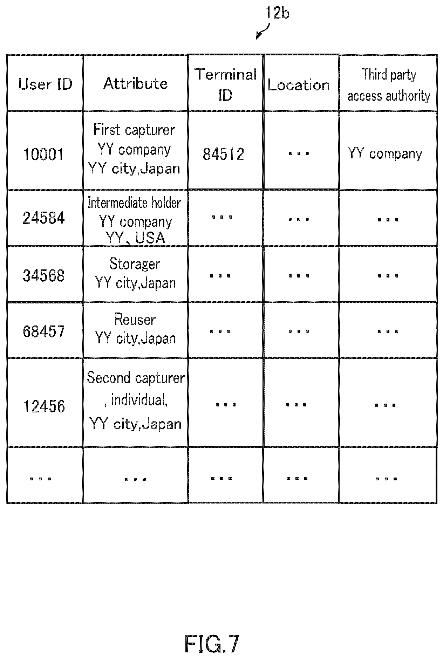

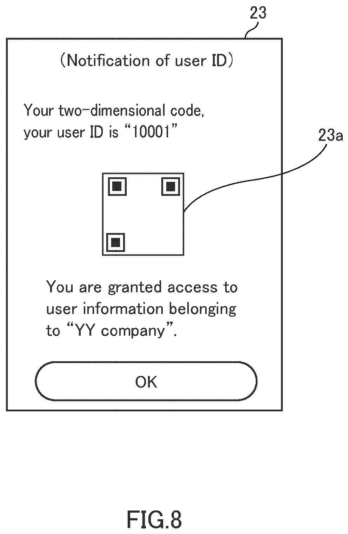

Fig. 7 is a diagram illustrating an example of information stored in a database 12b. As shown in Fig. 7, the management server device 10 stores the information received from the first capturer terminal 20 in the database 12b in association with a newly issued user ID. For example, the management server device 10 stores the identification information (terminal ID) of the first capturer terminal 20, the attribute information thereof, the location information thereof, and the information on third-party information acquisition authority thereof in the database 12b in association with the newly issued user ID. In addition to the above-described methods, the membership registration can be carried out by sending (e.g., snail-mailing or e-mailing), to the administrator, a registration sheet in which the above-described information in this paragraph is described. In such a case, in the process illustrated in Fig. 8, the membership number (such as the two-dimensional code 23a) is transmitted from the administrator terminal 50 to the first capturer terminal 20; a sticker on which the two-dimensional code 23a is written is sent to the first capturer by snail-mailing.

Fig. 8 is a diagram for illustrating an exemplary screen for notifying the user ID displayed on the display unit 23 of the first capturer terminal 20. The management server device 10 obtains the read and entered information on the membership registration page from the first capturer terminal 20, and newly issues a user ID. Then, the management server device 10 transmits, to the first capturer terminal 20, the two-dimensional code 23a in which the user ID is stored. Upon receiving the two-dimensional code 23a, the first capturer terminal 20 causes the display unit 23 to display the two-dimensional code 23a, as shown in Fig. 8. The two-dimensional code 23a may be a bar code or may be displayed as a number.

Further, when the management server device 10 receives information on third-party information acquisition authority from the first capturer terminal 20 (e.g., referred to as "individual A"), e.g., when the individual A wants to browse the information of the organization to which A himself/herself belongs (hereinafter referred to as "organization B"), although not shown, the management server device 10 performs notification or the like to the terminal of organization B for seeking approval. Then, when the management server device 10 obtains an approval from the terminal of the organization B, the management server device 10 controls the first capturer terminal 20 of the individual A so as to browse both the information (information on the captured amount, etc.) of the first capturer (the individual A) stored in the database 12b and the information of the organization B stored in the database 12b. In addition, the management server device 10 controls the terminal of the organization B so as to be able to browse the information (information on the captured amount, etc.) of the individual A stored in the database 12b. The approval procedure may be performed at the time of membership registration as described above, or may be performed after membership registration. Further, if the user himself/herself approves to publish his/her information stored in the database 12b, all other users can access the information. For example, with respect to captured amount of organizations and associations other than the organization to which the user himself/herself belongs, as well as the captured amount of individuals, the user can browse the information of the organizations, the associations, and the individuals who have approved the publication. Also, the information of organizations, associations, or individuals who have approved publication may be published on a website separately from the system. Then, as shown in Fig. 8, for example, a message such as "You can browse the information of the user belonging to 'YY Co., Ltd.'" is displayed on the display unit 23. Then, the first capturer can access the information associated with the user ID belonging to "YY Co., Ltd." in the database 12b. If the approval is rejected, for example, a message such as "Approval has been rejected. You cannot view the information of the user belonging to 'YY Co., Ltd.'" is displayed on the display unit 23.

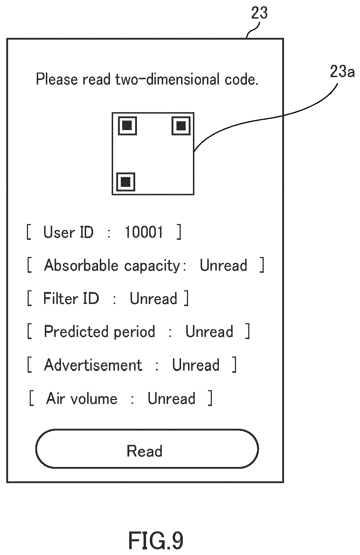

With reference to Fig. 9 to Fig. 13, processing related to reading by the reading unit 25 will be described. It should be noted that the operations performed by the reading unit 25 and the display unit 23 are executed by the control processing of the control unit 21. Fig. 9 to Fig. 13 are diagrams for illustrating examples of screen displayed on the display unit 23 of the first capturer terminal 20. When the application programming 26a of the first capturer terminal 20 is booted at the time of the first capturer's starting the absorption of carbon dioxide by the absorption unit 80, the reading by the reading unit 25 is started, and the screen shown in Fig. 9 is displayed on the display unit 23.

As shown in Fig. 9, the image of the two-dimensional code 23a photographed by the reading unit 25 is displayed on the display unit 23. The display unit 23 displays, for example, a message such as "please read a two-dimensional code", a column of "user ID", a column of "absorbable capacity", a column of "filter ID", a column of "predicted period", a column of "advertisement", and a column of "air volume". Information read by the reading unit 25 is displayed in each column. When the two-dimensional code 23a is read, for example, "10001" is displayed in the "user ID" column. Incidentally, the reading may be executed in response to an operation on the "reading" button displayed in Fig. 9, or may be executed automatically regardless of the operation.

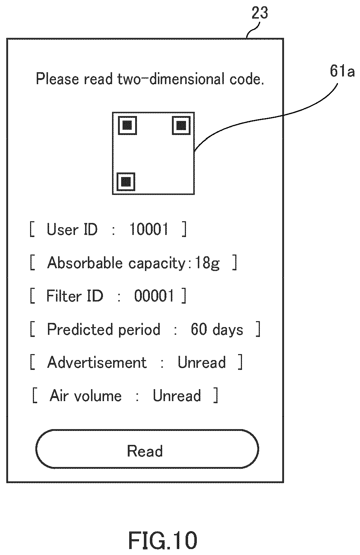

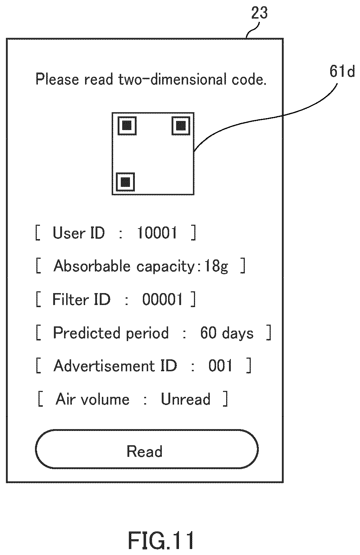

As shown in Fig. 10, when the two-dimensional code 61a is read, for example, "18 g" is displayed in the column of "absorbable capacity"; for example, "00001" is displayed in the column of "filter ID"; and "60 days" is displayed in the column of "predicted period". As shown in Fig. 11, when the advertising two-dimensional code 61d is read, for example, "001" is displayed in the column of "advertising ID".

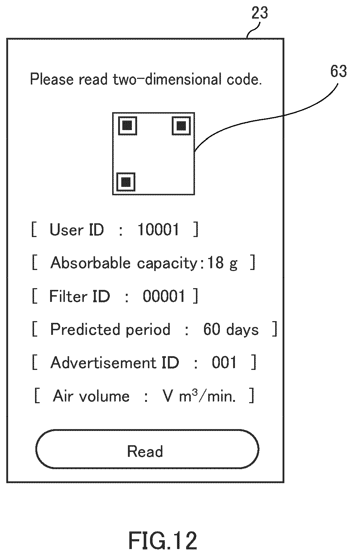

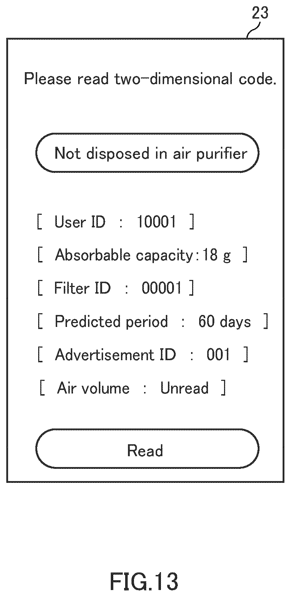

As illustrated in Fig. 12, when the device-information storage unit 63 is read, for example, "V m3/min." is displayed in the "air volume" column. Further, as shown in Fig. 13, when the first capturer does not install the absorption unit 80 in the air purifier 60, by selecting a button "not installed in the air purifier", the processing related to the reading by the reading unit 25 shown in Fig. 9 to Fig. 13 is completed.

Here, the time required for the absorbing material 61 to be saturated can be clarified by performing an experiment in advance. For example, the time for saturation is measured while the absorbing material 61 (the absorption unit 80) is left in an environment in which the concentration of carbon dioxide is relatively low, for example, such as in a range of from 300 ppm to 400 ppm. The two-dimensional code 61a contains the above-described time until saturation as the "predicted period". Accordingly, under an environment where the carbon dioxide concentration is from 300 ppm to 400 ppm or more, the time for the absorbing material 61 to be saturated after unsealing the wrapper 61b is equal to or less than the predicted period. In the example of Fig. 13, when the "not installed in the air purifier" button is selected (when the information on air volume is not read), as shown in Fig. 14, the control unit 21 determines, as the capture deadline of the absorbing unit 80, the date on which the predicted period read from the two-dimensional code 61a has passed from the current date. For example, if the "predicted period" is 60 days, the date of 60 days after the current date is determined as the capture deadline. Then, the control unit 21 displays the capture deadline of the absorption unit 80 on the display unit 23. Although Fig. 14 shows an example in which the "date" is displayed as the "capture deadline", the "time" may be further displayed. Accordingly, if the absorption unit 80 is replaced in accordance with the capture deadline, the first capturer can replace the absorption unit 80 immediately after saturation, and can efficiently capture carbon dioxide.

Further, where the absorption unit 80 is disposed in the air purifier 60, the time when the absorbing material 61 is saturated is earlier than the "predicted period". Therefore, in the first embodiment, the period when the absorption unit 80 (the absorbing material 61) to be saturated in a state of being disposed in the air purifier 60 is measured in advance. A coefficient, which is a proportion of the measured time relative to the predicted period, is stored in the application program 26a. Since the coefficient differs for each air volume, the coefficient is stored in the application program 26a in a state associated with the air volume. In the first embodiment, when the information on air volume is read by the reading unit 25, the control unit 21 determines the capture deadline of the carbon dioxide based on the predicted period, the information on the air volume, and the current date and time. For example, when the air volume is "V m3/min.", the control unit 21 reads the coefficient "0.2" from the application program 26a, and determines the number of days from the current date by multiplying the predicted period by the coefficient as the capture deadline of the absorbing unit 80. For example, if the "predicted period" is 60 days and the "coefficient" is 0.2, the date of 12 days after the current date is determined as the capture deadline. Accordingly, even when the speed of capturing carbon dioxide is improved, the capture deadline of carbon dioxide can be appropriately determined based on the information on the air volume.

Then, the control unit 21 transmits, to the management server device 10, information on the filter ID, the advertising ID, the absorbable capacity, the capture deadline, and the storage reuse period, which will be described later, in association with the user ID via the communication unit 24.

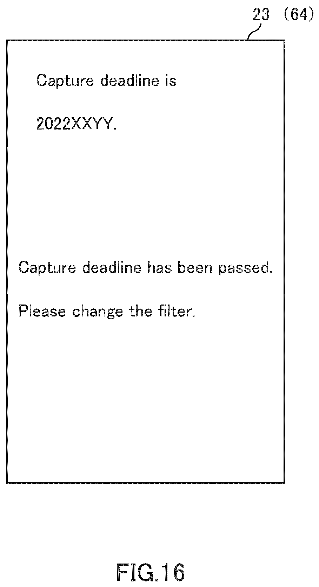

Further, as shown in Fig. 16, the control unit 21 allows the display unit 23 to display a message prompting the replacement of the absorption unit 80, such as a message "The capture deadline has expired. Replace the filter.", when the current date and time has passed the capture deadline.

Control unit 62 of the air purifier 60, similarly to the control unit 21, determines the "capture deadline", and displays the capture deadline to the notification unit 64 as shown in Fig. 14. The control unit 62 reads the predicted period from the two-dimensional code 61a by the reading unit 67, and determines the capture deadline of the carbon dioxide based on the predicted period, the information on the air volume, and the current date and time. Further, similarly to the control unit 21, the control unit 62 allows the notification unit 64 to display a message prompting the exchange of the absorption unit 80 when the current date and time has passed the capture deadline as shown in Fig. 16.

### <Configuration of Second Capturer Terminal 120>

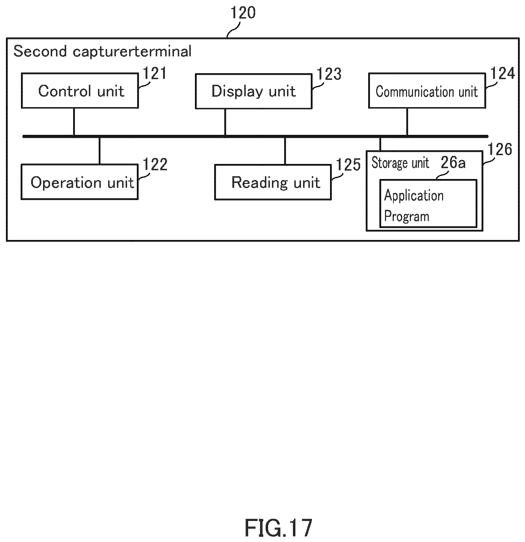

Fig. 17 is a block diagram illustrating a configuration of a second capturer terminal 120. As shown in Fig. 17, the second capturer terminal 120 includes a control unit 121, an operation unit 122, a display unit 123, a communication unit 124, a reading unit 125, and a storage unit 126. Then, the control unit 121 executes each control process of the second capturer terminal 120. The control unit 121, the operation unit 122, the display unit 123, the communication unit 124, the reading unit 125, and the storage unit 126 have the same configurations as those of the control unit 21, the operation unit 22, the display unit 23, the communication unit 24, the reading unit 25, and the storage unit 26, respectively, and thus description thereof is omitted.

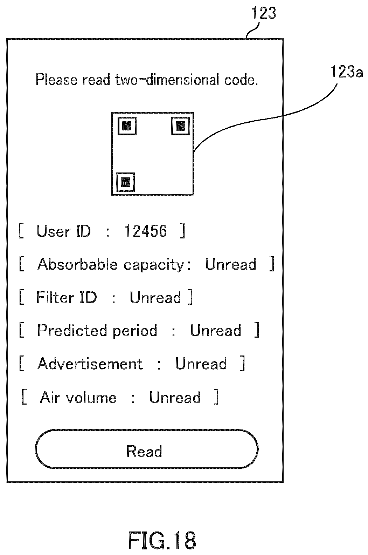

Fig. 18 is an example of an image displayed on the display unit 123 of the second capturer terminal 120. The second capturer reads the user ID from the two-dimensional code 123a in which the user ID of the second capturer is stored by the second capturer terminal 120 when or after collecting the absorption unit 80 from the first capturer. It should be noted that the second capturer is not limited to the one who directly collects the absorbing material 61 from the first capturer. The first capturer may place the absorbing material 61 in the predetermined collection place at any time in a predetermined collection place (for example, a garbage disposal place), and the second capturer may collect the absorbing material 61 placed in the predetermined collection place.

Then, similarly to the examples illustrated in Figs. 10 to 13, the second capturer reads the information from the two-dimensional code 61a of the absorbing unit 80 using the second capturer terminal 120. The second capturer terminal 120 transmits, to the management server device 10, the filter ID and the absorbable capacity read from the two-dimensional code 61a in association with the user ID of the second capturer. Then, the management server device 10 stores the filter ID and the absorbable capacity received from the second capturer terminal 120 in the database 12b in association with the user ID of the second capturer. Further, the management server device 10 calculates the remaining amount (unsaturated portion) of the absorbable capacity based on the date and time when the absorption of carbon dioxide has been started, the current date and time, and the capture deadline. For example, the management server device 10 sets the date and time at which the absorption capacity is received from the first capturer terminal 20 as the starting date and time at which the absorption is started, and calculates a first period from the starting date and time until the capture deadline. Then, the management server device 10 calculates a second period from the current date and time until the capture deadline. Thereafter, the management server device 10 regards a value at which a proportion of a subtracted value from the first period to the second period relative to the first period is multiplied by the absorbable capacity as the remaining amount (unsaturated amount) of the absorbable capacity. In addition, the management server device 10 transmits the remaining amount of the absorbable capacity to the second capturer terminal 120.

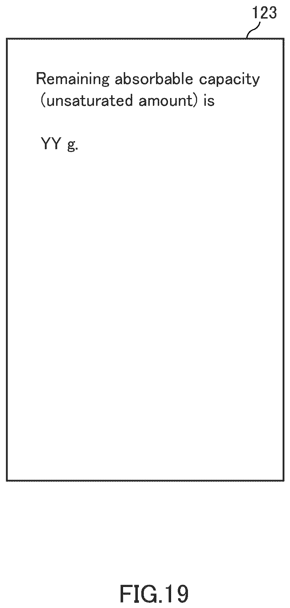

Hereinafter, there are cases, a case where the absorption unit 80 is delivered from the first capturer to the second capturer after the capture deadline of the absorption unit 80 (see Fig. 16), and a case where the absorption unit 80 is delivered from the first capturer to the second capturer before the capture deadline of the absorption unit 80 (see Fig. 14). As shown in Fig. 19, the display unit 123 of the second capturer terminal 120 displays the remaining amount of the absorbable capacity received from the management server device 10. The second capturer confirms the remaining amount of the absorbable capacity, and further advances the absorption of carbon dioxide by the absorption unit 80 when there is a remaining amount; or delivers the absorption unit 80 to the intermediate holder or the storager when there is no remaining amount.

### <Configuration of Intermediate Holder Terminal 30, Storage-Reuser Terminal 40, and Administrator Terminal 50>

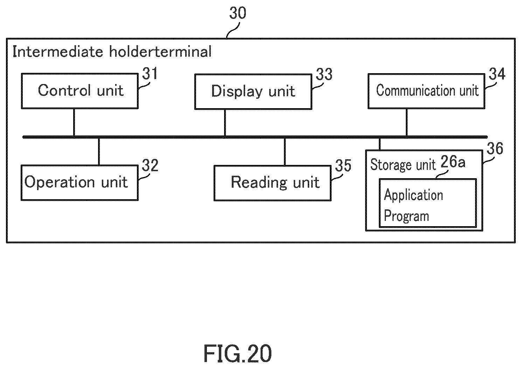

Fig. 20 is a block diagram illustrating a configuration of the intermediate holder terminal 30. As shown in Fig. 20, the intermediate holder terminal 30 includes a control unit 31, an operation unit 32, a display unit 33, a communication unit 34, and a reading unit 35. The control unit 31 includes a processor that executes a control process by executing a program. Then, the control unit 31 executes each control process of the intermediate holder terminal 30. Further, the operation unit 32, the display unit 33, the communication unit 34, and the reading unit 35 are the same as the operation unit 22, the display unit 23, the communication unit 24, and the reading unit 25, respectively, and thus description thereof is omitted.

The intermediate holder receives the absorption unit 80 from the second capturer, and transmits, to the management server device 10, the information read from the two-dimensional code 61a of the absorption unit 80 in association with the user ID (ID of the intermediate holder). Incidentally, the intermediate holder may receive the absorption unit 80 from the first capturer.

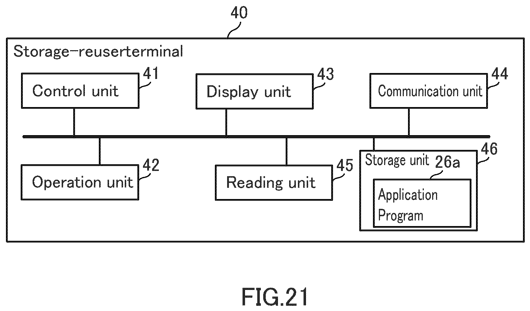

Fig. 21 is a block diagram illustrating a configuration of the storage-reuser terminal 40. As shown in Fig. 21, the storage-reuser terminal 40 includes a control unit 41, an operation unit 42, a display unit 43, a communication unit 44, and a reading unit 45. The control unit 41 includes a processor that executes a control process by executing a program. Then, the control unit 41 executes each control process of the storage-reuser terminal 40. Further, the operation unit 42, the display unit 43, the communication unit 44, and the reading unit 45 are the same as the operation unit 22, the display unit 23, the communication unit 24, and the reading unit 25, respectively, and thus description thereof is omitted.

The storager receives the absorption unit 80 from the intermediate holder, and transmits the information read from the two-dimensional code 61a of the absorption unit 80 to the management server device 10 with the user ID (ID of the storager) associated therewith. It should be noted that the storager may receive the absorption unit 80 from the first capturer or the second capturer.

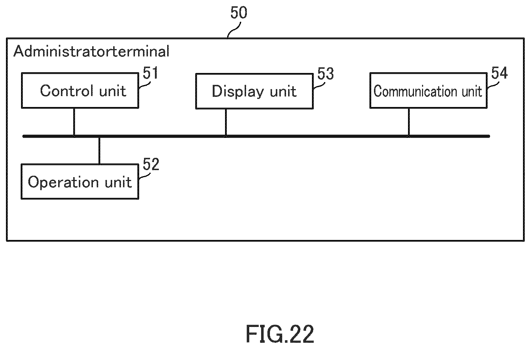

Fig. 22 is a block diagram illustrating a configuration of the administrator terminal 50. As shown in Fig. 22, the administrator terminal 50 includes a control unit 51, an operation unit 52, a display unit 53, and a communication unit 54. The control unit 51 includes a processor that executes a control process by executing a program. Then, the control unit 51 executes each control process of the administrator terminal 50. Further, the operation unit 52, the display unit 53, and the communication unit 54 are the same as the operation unit 22, the display unit 23, and the communication unit 24, respectively, and thus description thereof is omitted. An administrator who manages the management server device 10 operates the administrator terminal 50 to edit the database 12b.

### Configuration of Management Server Device 10

As shown in Fig. 3, the management server device 10 includes a control unit 11, a storage unit 12, and a communication unit 13. The control unit 11 includes a processor that executes a control process by executing a program 12a. Then, the control unit 11 executes each control process of the management server device 10. The communication unit 13 is a communication interface and is connected to the network N.

The storage unit 12 stores a program 12a and a database 12b. The program 12a is a program that causes the processor of the control unit 11 to execute each control process in order to manage the captured amounts of carbon dioxide in at least one of the atmosphere and the air emitted from apparatus.

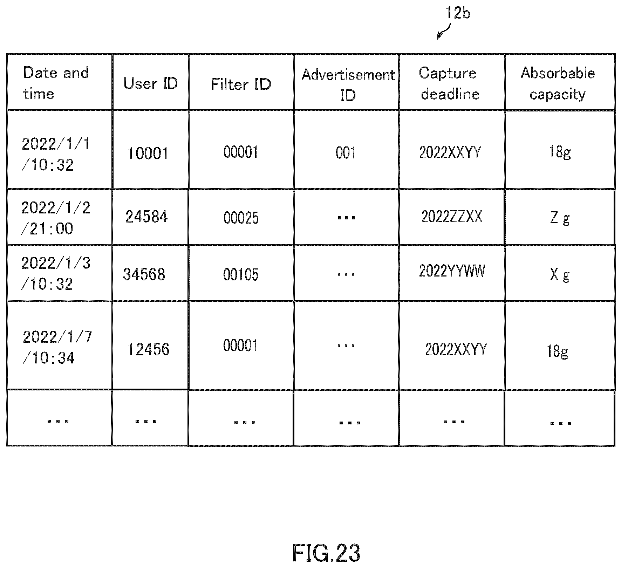

Fig. 23 is a diagram illustrating an example of information obtained by the control unit 11 from each terminal. The control unit 11 receives information on "user ID," "filter ID," "advertising ID," "absorbable capacity," and "collection due date" from the first capturer terminal 20, the second capturer terminal 120, the intermediate preserver terminal 30, and the storage-reuser terminal 40 through the communication unit 13. For example, as shown in Fig. 23, for example, the received information includes information on the obtained date and time (e.g., "2022/1/1/10:32"), the user ID (e.g., "10001"), the filter ID (e.g., "00001"), the advertising ID (e.g., "001"), the capture deadline (e.g., "date: 2022XXYY"), and the absorbable capacity (e.g., "18 g").

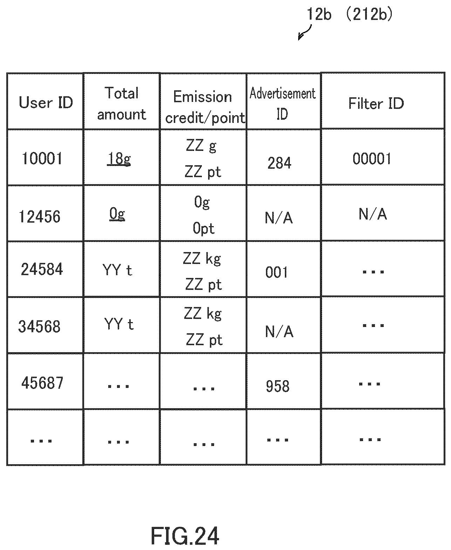

Fig. 24 is a diagram illustrating an example of information stored in a database 12b. As shown in Fig. 24, in the database 12b, a user ID is stored in association with a total value of a captured amount, an intermediate holding amount, or a storage-reusable amount of carbon dioxide, an emission credit/point, and an advertising ID. For example, when the management server device 10 receives data of "2022/1/1/10:32", i.e., the date and time shown in Fig. 23 from the first capturer terminal 20, the control unit 11 stores, in the database 12b, the absorbable capacity (18 g) received from the first capturer terminal 20 in association with the user ID (10001) as the amount of carbon dioxide captured by the first capturer as shown in Fig. 24, For example, when the "total quantity" of the user ID (10001) is "0 g", the control unit 11 adds 18 g to "0 g" and stores it as "18 g" in the database 12b.

When the management server device 10 receives the date and time "2022/1/1/10:32" shown in Fig. 23 from the first capturer terminal 20, the control unit 11 stores, in the database 12b, the absorbable capacity (18 g) received from the first capturer terminal 20 as the amount of carbon dioxide captured by the first capturer in association with the user ID (10001) as shown in Fig. 24. In addition, the control unit 11 stores the filter ID (00001) in the database 12b in association with the user ID (10001).

When receiving the filter ID, the management server device 10 determines whether or not the filter ID is associated with other user ID. For example, in the management server device 10, when receiving the data of the date and time "2022/1/7/10:34" shown in Fig. 23 from the second capturer terminal 120, the control unit 11 determines that the filter ID (00001) is associated with the user ID (10001). In this case, when the date and time "2022/1/7/10:34" received from the second capturer terminal 120 was prior to the capture deadline shown in Fig. 23 (date; 2022XXYY), the control unit 21 adds the amount of carbon dioxide absorbed by absorbing material 61 from the received date and time until the capture deadline (the remaining amount of the absorbable capacity) to the total amount as the captured amount of carbon dioxide by the second capturer as shown in Fig. 25A. That is, the control unit 21 stores the remaining amount of the absorbable capacity (unsaturated amount) in the database 12b in association with the user ID of the second capturer. In addition, when the remaining amount of the absorbable capacity is stored in the database 12b as the captured amount of carbon dioxide by the second capturer (the user ID is 12456), the control unit 21 performs a process of subtracting the remaining amount of the absorbable capacity from the captured amount (the total amount) of carbon dioxide by the first capturer (the user ID is 10001) in the database 12b. For example, when the remaining amount of the absorbable capacity is "9 g", the control unit 21 decreases the total amount of the first capturers (the user ID is 10001) from "18 g" to "9 g", and increases the total amount of the second capturers (the user ID is 12456) from "0 g" to "9 g". Accordingly, overlapping storage of the captured amounts between the first capturer and the second capturer can be avoided. As a result, it is possible to appropriately store data of the captured amount of the second capturer and the one of the first capturer.

In addition, the management server device 10 stores, in the database 12b, the absorbable capacity received in association with the user ID whose user attribute is "intermediate holder" as the intermediate holding amount of carbon dioxide. For example, when the date and time "2022/1/2/21:00" shown in Fig. 23 is received from the intermediate holder terminal 30, the control unit 21 adds the received absorbable capacity to the sum of the intermediate holding amount of carbon dioxide associated with the user ID (24584), as shown in Fig. 24.

In addition, the management server device 10 stores, in the database 12b, the absorbable capacity received in association with the user ID whose user attribute is "storager" as a storager of carbon dioxide. For example, when the date and time "2022/1/3/10:32" shown in Fig. 23 is received from the storage-reuser terminal 40, the control unit 21 adds the received absorbable capacity to the sum of the storage-reusable amount of carbon dioxide associated with the user ID (34568), as shown in Fig. 24.

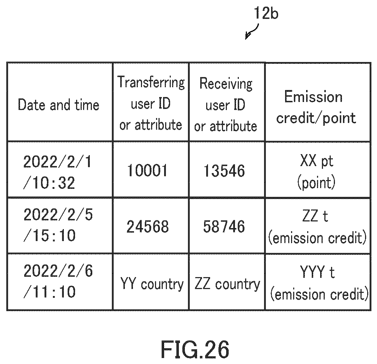

Further, as shown in Fig. 24, in the database 12b, emission credits and points are stored in association with the user IDs. Then, as shown in Fig. 26, the user can take over the emission credits and points with other users, and the transaction result is transmitted from each information terminal to the management server device 10. For example, as shown in Fig. 26, the control unit 11 obtains information indicating that the "transfer source user ID is '10001'", the "transfer destination user ID is '13546'", and the "collected point is 'xx pt'" from the first capturer terminal 20 (transfer source user). The control unit 11 reduces the point "xx pt" from the point of the user ID "10001" in the database 12b, and adds the point "xx pt" to the point of the user ID"24568. Further, as shown in Fig. 26, not only the user but also the transaction result of the emission credit between a country and another country is stored in the database 12b.

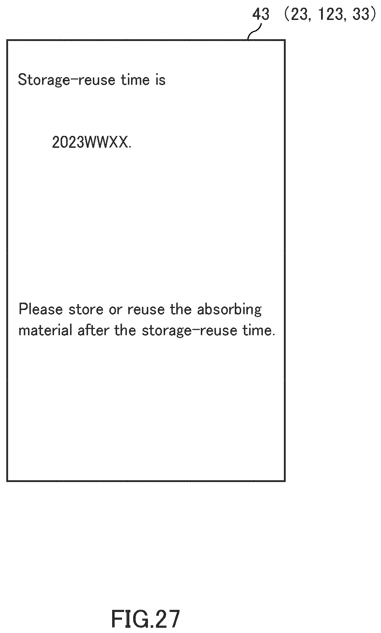

When the two-dimensional code 61a (see Fig. 10) is read, the control unit 21 of the first capturer terminal 20 determines a storage-reuse time, which is a time when the absorbing material 61 is stored or a time when the absorbing material 61 is reused, based on the read predicted period and the current date and time. The "storage-reuse time" is a time after the capture deadline, and is a time when the absorbing material 61 is sufficiently saturated. For example, as shown in Fig. 27, the control unit 21 determines the storage-reuse time as a time (for example, date: 2023WWXX) after the capture deadline (for example, date: 2022XXYY). For example, the control unit 21 determines, as the storage-reuse time period, a time point at which the predicted period has passed with respect to the capture deadline. That is, where the absorbing unit 80 is not disposed in the air purifier 60, the control unit 21 determines, as the storage-reuse time, a time point at which a time period twice as long as the predicted period has passed from the current date and time (the date and time at which the two-dimensional code 61a is read). Incidentally, shown thereabove are examples of storage-reuse time, i.e., the storage-reuse time is determined as the time point at which a predicted period has passed with respect to the capture deadline; the storage-reuse time is determined as the time point at which a time period twice as long as the predicted period has passed from the current date and time (the date and time of reading the two-dimensional code 61a) where the absorption unit 80 is not disposed in the air purifier 60. However, the present disclosure is not limited to thereabove. In other words, the storage-reuse time may be experimentally determined in advance as the time when the absorbing material 61 is sufficiently saturated with respect to the capture deadline, so that the time experimentally determined may be stored in the first capturer terminal 20 or the management server device 10 as the storage-reuse time.

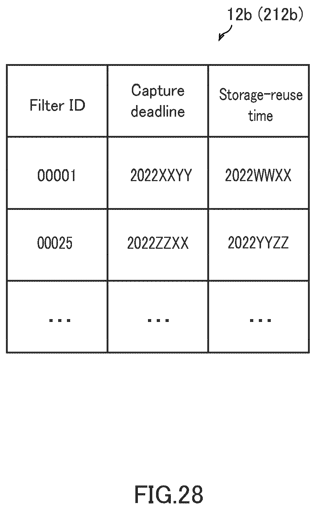

Then, the first capturer terminal 20 transmits, to the management server device 10, the determined storage-reuse time and capture deadline in association with the filter ID. As shown in Fig. 28, the control unit 11 of the management server device 10 stores, in the database 12b, the received storage-reuse time and capture deadline in association with the filter ID. Thereafter, when the filter ID is transmitted from the second capturer terminal 120, the intermediate holder terminal 30, and the storage-reuser terminal 40 to the management server device 10, the management server device 10 transmits the storage-reuse time associated with the filter ID to the terminal that has transmitted the filter ID. The terminal that has transmitted the filter ID (e.g., the storage-reuser terminal 40) receives the storage-reuse time, and displays the received storage-reuse time on the display unit (the display unit 43 for the storage-reuser terminal 40) as shown in Fig. 27. For example, the control unit 41 displays "storage-reuse time is date: 2023WWXX" on the display unit 43, as well as displays a message to urge storage or reuse after the storage-reuse time, such as "Please store or reuse the absorbing material after the storage-reuse time", after the storage-reuse time or reuse has passed. The screen illustrated in Fig. 27 may be displayed on the display unit 123 or 33. In addition, the first capturer terminal 20 may display the screen shown in Fig. 27 on the display unit 23 where transmitting (for example, after transmitting) the determined storage-reuse time and capture deadline in association with the filter ID to the management server device 10.

According to the above-described configuration, even in a state in which the absorbing material 61 collected in the capture deadline is not actually saturated (unsaturated), since the absorbing material 61 is stored or reused after the storage-reuse period, which is a time after the capture deadline, it is possible to prevent the unsaturated absorbing material 61 from being stored or reused.

### [Second Embodiment]

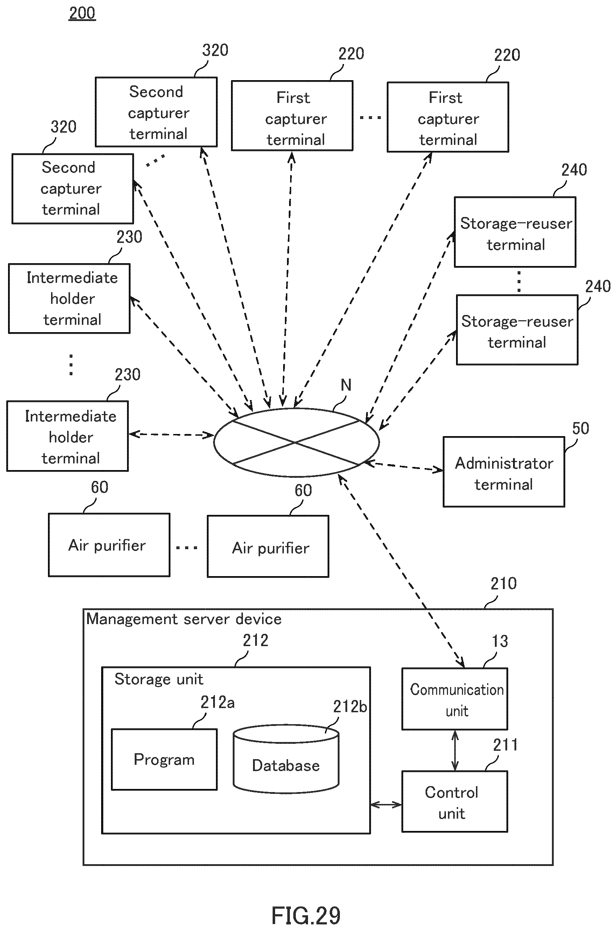

Next, a configuration of a management system 200 for captured amount of carbon dioxide according to a second embodiment will be described with reference to Fig. 29 to Fig. 31. In the first embodiment, the filter ID, the absorbable capacity, and the predicted period are stored in the two-dimensional code 61a, but in the second embodiment, only the filter ID is stored in the two-dimensional code 261a. It should be noted that the same reference numerals as in the first embodiment are used for the same configurations as in the first embodiment, and description thereof will be omitted.

Fig. 29 is a block diagram of a management system 200 for captured amount of carbon dioxide (hereinafter, referred to as "system 200") according to the second embodiment. The system 200 includes a management server device 210, a first capturer terminal 220, a second capturer terminal 320, an intermediate holder terminal 230, and a storage-reuser terminal 240. The management server device 210 includes a control unit 211 and a storage unit 212. The storage unit 212 stores a program 212a and a database 212b.

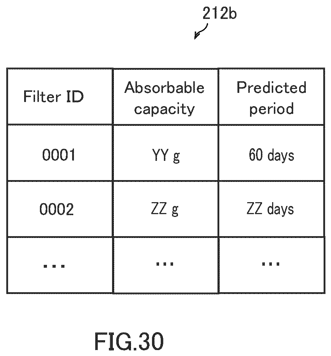

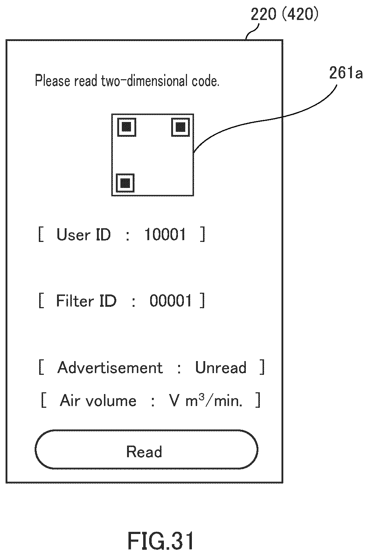

As shown in Fig. 30, in the second embodiment, the database 212b is pre-stored with an absorbable capacity and a predicted period associated with the filter ID. As a result, as shown in Fig. 31, the first capturer terminal 220 reads the filter ID from the two-dimensional code 261a, and transmits the information on the filter ID and the air volume to the management server device 210 in association with the user ID.

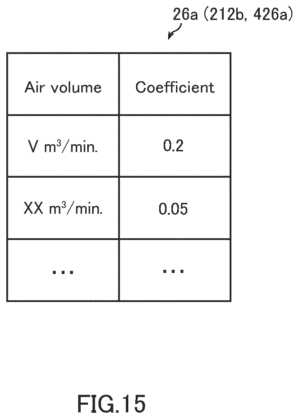

Then, the management server device 210 refers to the database 212b and reads the absorbable capacity and the predicted period associated with the filter ID. In the database 212b of the management server device 210, data indicating the relationship between the air volume information and the coefficient shown in Fig. 15 are stored. Then, the control unit 211 reads, from the database 212b, a coefficient associated with the information on the air volume received from the first capturer terminal 220, and determines, as the capture deadline, the date and time when the number of days obtained by multiplying the read coefficient by the predicted period with respect to the current date and time. The control unit 211, thereafter, stores, in the database 212b, the user ID in association with the filter ID, the absorbable capacity, and the capture deadline, similarly to the case illustrated in Fig. 23. Then, the control unit 211 adds the absorbable capacity and the filter ID to the total amount of the corresponding user ID (stored as the captured amount of carbon dioxide) in the same manner as in the embodiment illustrated in Fig. 24.

In addition, when the predicted period is read, the control unit 211 determines a storage-reuse time, which is a time when the absorbing material 61 is stored or a time when the absorbing material 61 is reused, based on the read predicted period and the current date and time. Since the method of determining the storage-reuse time is the same as that of the first embodiment, the description thereof will be omitted. The management server device 210 stores, in the database 212b, the determined storage-reuse time and capture deadline in association with the filter ID. As shown in Fig. 28, the control unit 11 of the management server device 10 stores the determined storage-reuse time and capture deadline in the database 212b in association with the filter ID. Thereafter, when the filter ID is transmitted from the second capturer terminal 320, the intermediate holder terminal 230, and the storage-reuser terminal 240 to the management server device 210, the management server device 210 transmits the storage-reuse time associated with the filter ID to the terminal that has transmitted the filter ID. The terminal that has transmitted the filter ID receives the storage-reuse time, and displays the received storage-reuse time on the display unit as shown in Fig. 27. Further, the management server device 210 may transmit the determined storage-reuse time to the first capturer terminal 220, and the first capturer terminal 220 may display the received storage-reuse time on the display unit 23 in the same manner as the screen example shown in Fig. 27.

In addition, the control unit 211 transmits information on the capture deadline to the first capturer terminal 220. The first capturer terminal 220 displays the received capture deadline on the display unit 23 as in the example of Fig. 14. The second capturer terminal 320, the intermediate holder terminal 230, and the storage-reuser terminal 240 are configured in the same manner as the first capturer terminal 220. Also with this configuration, it is possible to prevent the captured amount of carbon dioxide from being stored at an incorrect value. Other configurations and effects of the second embodiment are the same as those of the first embodiment.

### [Modified Example of Second Embodiment]

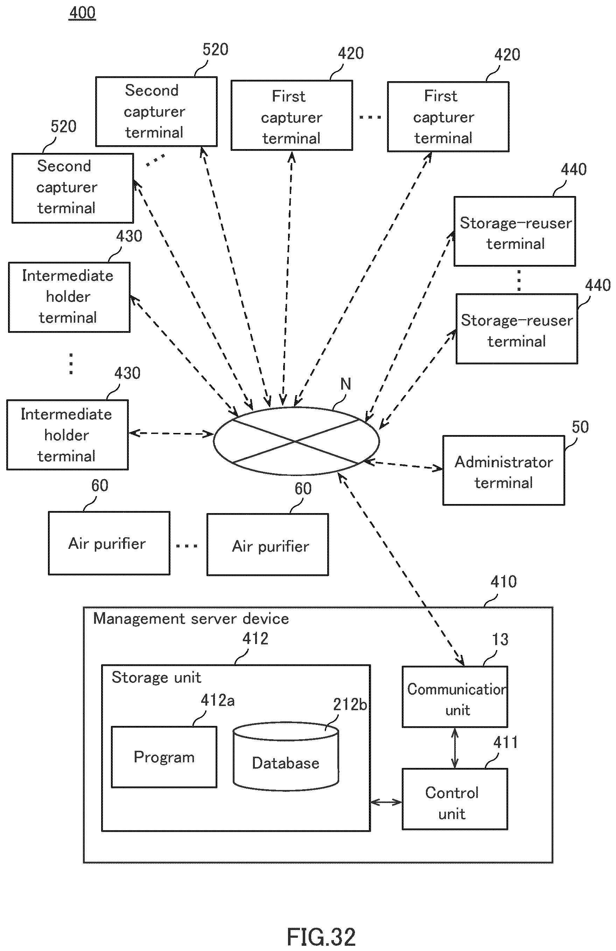

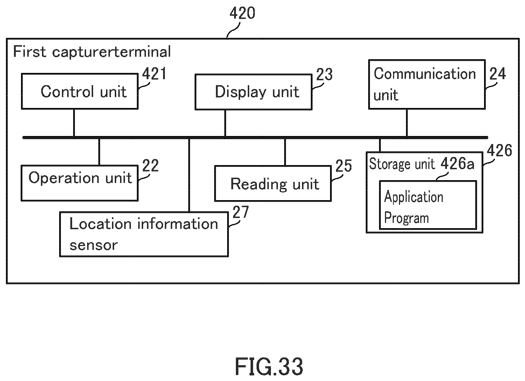

Although the second embodiment describes the example in which the capture deadline is determined by the management server device 210, the present disclosure is not limited to thereabove. For example, as shown in a management system 400 for captured amount of carbon dioxide (hereinafter, referred to as "system 400") according to the modified example of the second embodiment illustrated in Figs. 32 and 33, the capture deadline may be determined by the first capturer terminal 420.

Fig. 32 is a block diagram of a system 400 according to the modified example of the second embodiment. Fig. 33 is a block diagram of the first capturer terminal 420. As shown in Fig. 32, the system 400 includes a management server device 410, a first capturer terminal 420, a second capturer terminal 520, an intermediate holder terminal 430, and a storage-reuser terminal 440. The management server device 410 includes a control unit 411 and a storage unit 412. The storage unit 412 stores a program 412a and a database 212b. As shown in Fig. 33, the first capturer terminal 420 includes a control unit 421 and a storage unit 426 in which application program 426a is stored.

As shown in Fig. 31, the first capturer terminal 420 reads the filter ID from the two-dimensional code 261a, and transmits, to the management server device 410, the filter ID in association with the user ID. The management server device 410 refers to the database 212b and reads the absorbable capacity and the predicted period associated with the filter ID. Then, the management server device 410 stores, in the database 212b, the user ID received from the first capturer terminal 420 in association with the filter ID and the absorbable capacity. In the same manner as shown in Fig. 24, the management server device 410 adds the absorbable capacity and the filter ID to the total amount of the corresponding user ID (stored as the captured amount of carbon dioxide).

Then, the management server device 410 transmits the predicted period to the first capturer terminal 420. In addition, the application program 426a stores data indicating the relationship between the air volume information and the coefficient shown in Fig. 15. Thereafter, the control unit 421 of the first capturer terminal 420 executes the application program 426a to read the coefficient associated with the information of the air volume which is read from the device-information storage unit 63 (see Fig. 5). The control unit 421 determines a date and time of the capture deadline by multiplying the predicted period received from the management server device 410 by the coefficient, and adding the resulting number of days to the current date and time.

Then, the control unit 421 displays the capture deadline on the display unit 23, similarly to the example in Fig. 14. In addition, the first capturer terminal 420 transmits the capture deadline to the management server device 410 in association with at least one of the user ID and the filter ID. Then, the management server device 410 stores the received capture deadline in the database 212b in association with the user ID, the filter ID and the absorbable capacity, similarly to the case illustrated in Fig. 23. The second capturer terminal 520, the intermediate holder terminal 430, and the storage-reuser terminal 440 are configured in the same manner as the first capturer terminal 420. Also with this configuration, it is possible to prevent the captured amount of carbon dioxide from being stored at an incorrect value.

### [Third Embodiment]

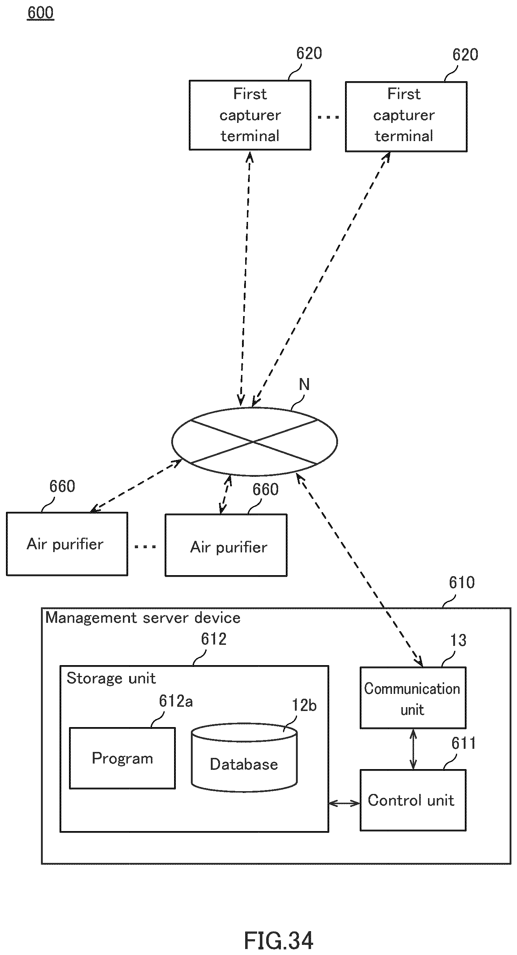

Next, the configuration of the management system 600 for captured amount of carbon dioxide according to a third embodiment will be described with reference to Fig. 34 to Fig. 36. In the third embodiment, a concentration sensor 661 detecting the concentration of carbon dioxide is disposed in the air purifier 660. It should be noted that the same reference numerals as in the first embodiment are used for the same configurations as in the first embodiment, and description thereof will be omitted.

Fig. 34 is a block diagram of a management system 600 for captured amount of carbon dioxide (hereinafter, referred to as "system 600") according to the third embodiment. The system 600 includes a management server device 610, a first capturer terminal 620, and an air purifier 660. In Fig. 34, illustration of the second capturer terminal, the intermediate manager terminal, the storage-reuser terminal, and the administrator terminal is omitted.

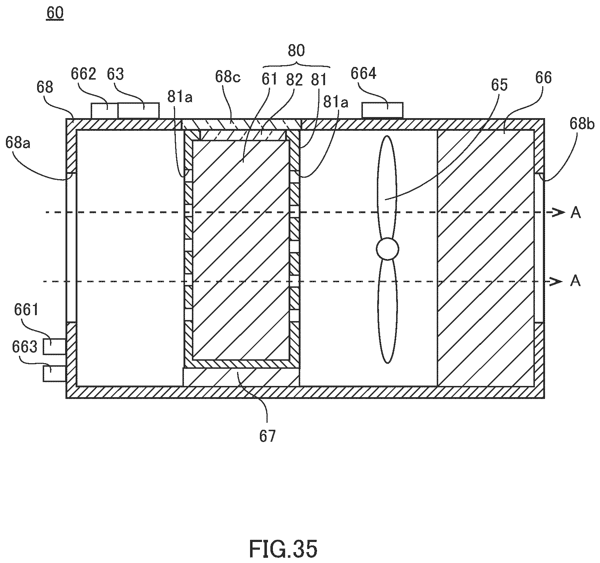

The management server device 610 includes a control unit 611 and a storage unit 612. The storage unit 612 stores a program 212a. As shown in Fig. 35, the air purifier 660 includes a concentration sensor 661 detecting a carbon dioxide concentration, a control unit 662, a communication unit 663, and a display unit 664. The communication unit 663 is a communication interface through which the management server device 610 communicates with the first capturer terminal 620 via the network N. The concentration sensor 661 is disposed, for example, outside the housing 68 of the air purifier 660, and detects the concentration of carbon dioxide in the ambient air.

When the carbon dioxide concentration is higher than the predetermined range, the control unit 662 updates (advances) the capture deadline once determined by the first capturer terminal 620 to a shorter period. Alternatively, when the carbon dioxide concentration is less than the predetermined range, the control unit 662 updates (falls backward) the capture deadline once determined by the first capturer terminal 620 to a longer period. For example, if the capture deadline is determined experimentally under an environment containing carbon dioxide within a range of from 300 ppm to 400 ppm, the "predetermined range" is from 300 ppm to 400 ppm. The "predetermined range" may be a value other than from 300 ppm to 400 ppm.

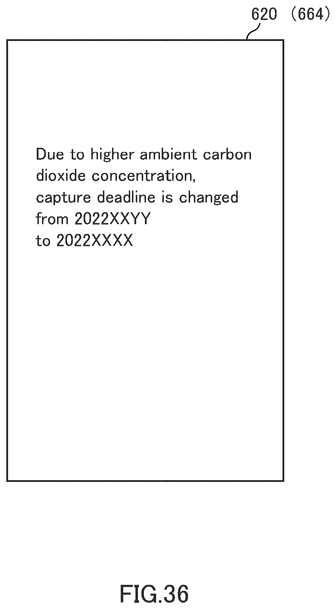

For example, where the predetermined range is set to a range from 300 ppm to 400 ppm, when the carbon dioxide concentration detected by the concentration sensor 661 is 700 ppm which is higher than 400 ppm, as shown in Fig. 36, the control unit 662 updates the capture deadline from the date (e.g., date: 2022XXYY) into a shorter date (e.g., date: 2022XXXX wherein : XX is a date before YY). For example, the control unit 662 divides the detected carbon dioxide concentration (for example, 700 ppm) by the median value (for example, 350 ppm) of the predetermined range to calculate a value (in this case, 1/2). Then, the control unit 662 multiplies the number of days from the current date and time until the capture deadline by the calculated value (in the above case, 1/2), and sets, as the updated capture deadline, the date and time obtained by multiplying the current date and time by the number of days. That is, when the capture deadline is 20 days after the current date and time, the date and time 10 days after the current date and time is set as the updated capture deadline.

Then, as shown in Fig. 36, the control unit 662 displays the updated capture deadline on the display unit 664. For example, a message such as "The capture deadline has been changed from 2022XXYY to 2022XXXX because the ambient CO2 density is high." is displayed on the display unit 664. In addition, the control unit 662 transmits the updated capture deadline in association with the filter ID to the management server device 610 and the first capturer terminal 620 via the communication unit 663. The first capturer terminal 620 displays the received updated capture deadline as shown in the example of Fig. 36. By executing the program 612a, the control unit 611 of the management server device 610 changes (overwrites and saves) the capture deadline in association with the filter ID into the received updated capture deadline on the database 12b of the storage unit 612. Incidentally, when the carbon dioxide concentration detected by the concentration sensor 661 is 300 ppm or lower, the control unit 662 updates the captured date (e.g., 2022XXYY) to a later date (Figure is not shown).

According to the configuration of the third embodiment, the capture deadline once determined is allowed to be updated to a more accurate deadline in accordance with the detected carbon dioxide concentration. Thus, for example, the replacement timing of the absorbing material 61 can be shortened when the carbon dioxide concentration is high, whereas the absorbing material 61 in an unsaturated state can be prevented from being replaced when the carbon dioxide concentration is low.

In the third embodiment, the control unit 662 of the air purifier 660 calculates the updated capture deadline, but the present disclosure is not limited thereto. For example, the first capturer terminal 620 may obtain the carbon dioxide concentration from the air purifier 660 by transmission, and the first capturer terminal 620 may calculate the updated capture deadline. Alternatively, the management server device 610 may acquire the carbon dioxide concentration from the air purifier 660 by transmission, and the management server device 610 may calculate the updated capture deadline.

### [Modified Example]

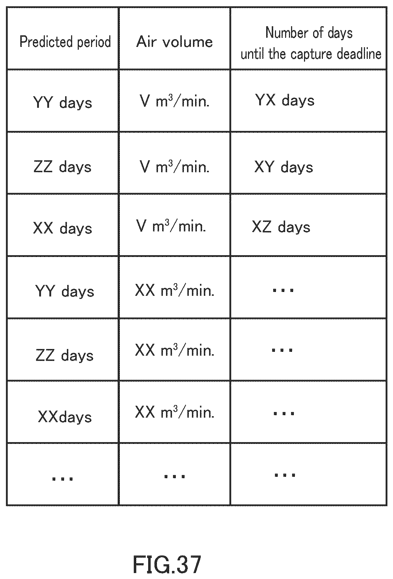

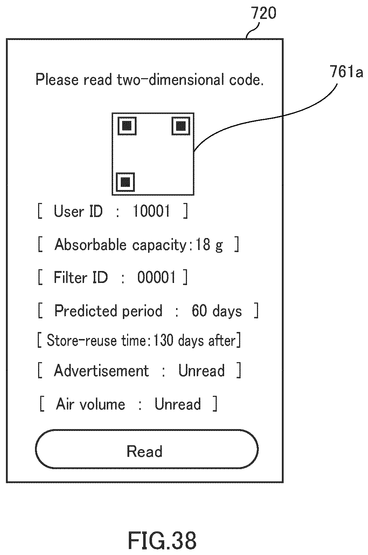

The above-described embodiments are merely examples for implementing the present disclosure. Therefore, the present disclosure is not limited to the above-described embodiments, and the above-described embodiments can be appropriately modified and implemented without departing from the spirit thereof.
(1) Although the first to third embodiments described above have shown examples in which the absorption unit 80 is disposed in the air purifier 60, the present disclosure is not limited thereto. Accordingly, the absorption unit 80 may be disposed in a device (carbon dioxide removal device without an air cleaning filter). For example, the device may be configured as a refrigeration apparatus such as a vending machine, an air conditioning equipment such as a dehumidifier, a humidifier, a ventilator, an air conditioner, and the like. The carbon dioxide removal device is not limited to an air conditioning equipment, and may be configured as a boiler, an incinerator, a cooking apparatus such as a gas range, a processing machine, a thermal power plant, a wind power generator, a geothermal generator, a solar power machine, or other machinery; may be composed of a filter, in addition to a carbon dioxide sensor, attached to an air intake or air duct of a vending machine, a refrigerator, a mobile body, such as a motor vehicle, a bike, an train; and may be a carbon dioxide removal device attached to an electric column, a postal post, a gas meter, a water supply meter, an furnishing, a clock, an illumination, a wall, a ceiling, a floor, etc. For example, if the carbon dioxide removal device is provided in the thermal power generator, the carbon dioxide can be efficiently captured. Similarly, by configuring the carbon dioxide removal device as a generator including other generators (disposing a carbon dioxide removal device inside the generator), electric power required for the operation of the carbon dioxide removal device can also be provided by the generator.
(2) The first to third embodiments have shown the examples in which the information on the air volume is read from the device-information storage unit 63 when the absorbing unit 80 is disposed to the air purifier 60, but the present disclosure is not limited to this example. That is, even when the absorption unit 80 is disposed in the air purifier 60, the predicted period may be determined as the capture deadline.
(3) The first to third embodiments have shown the examples in which the two-dimensional code 61a is disposed on the side 81d of the absorbing unit 80, but the present disclosure is not limited to this example. That is, the two-dimensional code 61a may be disposed on the front 81b or the back 81c of the absorption unit 80; the two-dimensional code 61a may be disposed on the inner surface of the wrapper 61b; or the two-dimensional code 61a may be disposed on a medium (paper or card) disposed between the absorption unit 80 and the wrapper 61b (configured as a separate material from the absorption unit 80 in the wrapper 61b).
(4) The first to third embodiments have shown the examples in which the cross section of the absorption unit 80 is formed in a cuboid or rectangular shape (a rectangular parallelepiped as a whole) as shown in Fig. 2, but the present disclosure is not limited to this example. That is, the cross section of the absorption unit 80 may be circular, elliptical, oval, polygonal, triangular, or the like, or may be cylindrical, column, or conical as a whole.
(5) The first to third embodiments have shown the examples in which the capture deadline is displayed on the display unit 23, but the present disclosure is not limited to this example. The capture deadline may be an audio output.
(6) Each of the configurations of the first to third embodiments may further comprise a sensor determining whether or not the color of the absorbing material 61 becomes the color in a saturated state thereof. In this case, the system may be configured to notify the saturation of the absorbing material 61 from the first capturer terminal or the air purifier in response to the color change of the absorbing material 61 in the saturated state.
(7) The first to third embodiments have shown the examples in which the wrapper 61b is formed into a bag shape from films, but the present disclosure is not limited thereto. For example, the wrapper 61b may be formed into a box shape by combining plate materials made of metal or resin, or may be formed into a cylindrical shape made of glass or plastic.
(8) The above-described first embodiment has shown the example in which the first capturer terminal determines the capture deadline has been described, but the present disclosure is not limited to this. That is, as in the first embodiment, even when the filter ID, the absorbable capacity, and the predicted period are stored in the two-dimensional code, as in the second embodiment, the management server device may obtain the information of the air volume from the first capturer terminal, and the capture deadline may be determined by the management server device based on a predicted period, information (coefficient) on an air volume, and a current date and time. In other words, the first capturer terminal transmits the predicted periods and the information on the air volumes read in association with the user ID to the management server device. Then, the management server device receives the information on the air volume and the predicted period, and reads out the coefficient corresponding to the air volume, similarly to the example shown in Fig. 15. Further, the management server device determines a capture deadline based on the predicted period, the coefficient, and the current date and time, and transmits the determined capture deadline to the first capturer terminal. The first capturer terminal executes the display unit to display the received capture deadline, similarly to the example shown in Fig. 14.
(9) The first to third embodiments have shown the examples in which the capture deadline is determined, when the information on the air volume is read, by reading out the coefficient corresponding to the information on the air volume, by the coefficient with the predicted period, and by adding the number of days obtained to the current date and time, but the present disclosure is not limited thereto. For example, as in the modified example of the management system for captured amount of carbon dioxide shown in Fig. 32, the capture deadline may be determined without multiplied number. For example, as shown in Fig. 37, the predicted period and the air volume may be stored in the application program of the first capturer terminal or the database of the management server device in a state associated with the number of days until the capture deadline. The "number of days until the capture deadline" is the number of days which is experimentally obtained as the number of days required for the absorbing material to be saturated in a state, for example, where the absorption filter is disposed in the air purifier. Then, the first capturer terminal or the management server device reads the number of days until the capture deadline based on the predicted period and the air volume, and determines, as the capture deadline, the date and time that has passed the number of days from the current date.
(10) The above-described first to third embodiments have shown the examples in which the storage-reuse time is determined as the time exceeding the predicted period with respect to the capture deadline, as well as the examples in which the storage-reuse time is determined as the time exceeding twice the predicted period from the current date and time (the date and time when the two-dimensional code 61a is read) in the case where the absorbing unit 80 is not disposed in the air purifier 60, but the present disclosure is not limited to this. For example, the two-dimensional code 761a may store information of the storage-reuse time in advance. In this case, as in the first capturer terminal 720 according to the third modified example illustrated in Fig. 38, the storage-reuse time can be read by reading the two-dimensional code 761a. The read storage-reuse time is transmitted from the first capturer terminal 720 to the management server device and stored in association with the filter ID in the management server device.
(11) The first to third embodiments have shown the examples in which the absorbing material is stored or reused after the storage-reuse time which has been determined, but the present disclosure is not limited thereto. For example, the storager or the reuser may store or reuse the absorbing material, without applying the storage-reuse time, at the time when the degree of saturation of the absorbing material is greater than or equal to a desired value. For example, the storager or the reuser may measure the weight of the absorbing material, and when the measured weight of the absorbing material is greater than or equal to a desired weight, the storage or the reuser may store or reuse the absorbing material. In addition, the storager or the reuser may measure the content of carbon dioxide in the absorbing material and store or reuse the absorbing material when the measured content becomes equal to or greater than a desired content. The "measurement of the content" can be implemented, for example, by using a fluorescent X-ray inspection apparatus. Incidentally, the "measurement of the content" may be a measurement of only a part (sample) of the absorbing material.

Further, the above-described configuration can be described as follows.

A management system for captured amount of carbon dioxide according to a first configuration is provided with a server device storing a captured amount of carbon dioxide by a user, the system comprises: an absorbing material which absorbs carbon dioxide in air; a wrapper which is provided with an absorbing material therein and is sealed so that air outside the absorbing material does not come into contact with the absorbing material; an information storage unit which is disposed inside the wrapper and contains an absorbable capacity which is an amount of carbon dioxide absorbable by the absorbing material; and a first information terminal including a reading unit reading an absorbable capacity from the information storage unit, and a transmitting unit transmitting the absorbable capacity read by the reading unit in associated with the identification information of the first user; wherein the information storage unit is disposed at a position where it is unreadable by the reading unit when the inside of the wrapper is sealed, and it is readable by the reading unit when the wrapper is unsealed; and the server device stores an absorbable capacity received from the first information terminal as a captured amount of carbon dioxide by the first user. (First Configuration).

According to the first configuration, since the absorbing material is sealed with the wrapper so that the external air does not come into contact with the absorbing material, absorption of carbon dioxide by the absorbing material is prevented until the absorbing material reaches the user's hand. As a result, the whole absorbable capacity received from the first information terminal can be regarded as the amount of captured carbon dioxide that is absorbed after the first information terminal has arrived at the user's hand. Accordingly, it is possible to prevent the captured amount of carbon dioxide stored in the server device from being fraudulently larger than the amount of carbon dioxide actually absorbed in the absorbing material by the user. The information storage unit is disposed at a position where it is unreadable by the reading unit when the inside of the wrapper is sealed, and it is readable by the reading unit when the wrapper is unsealed, so that it is possible to prevent the absorbable capacity from being fraudulently read from the information storage unit in a state where the inside of the wrapper is sealed (a state where the absorbing material has not yet absorb carbon dioxide). As a result, transmission of the information which is fraudulently read from the information storage unit despite the absorbing material absorbs carbon dioxide by the user can be avoided. Accordingly, it is possible to prevent the captured amount of carbon dioxide from being stored at an incorrect value.

In the first configuration, the information storage unit may further store a predicted period until which the absorbing material saturates. The reading unit may be configured to read the predicted period from the information storage unit. Either the first information terminal or the server device may further include a deadline-determination unit determining a capture deadline of carbon dioxide based on the predicted period and the current date and time. The first information terminal may further include a notification unit configured to notify a capture deadline of carbon dioxide determined by the deadline-determination unit (Second Configuration).

According to the second configuration, it is possible to notify the user of a deadline (capture deadline) until when the absorbing material is capable of capturing carbon dioxide. If the user replaces the absorbing material depending on the capture deadline based on this notification, the user can replace the absorbing material immediately after saturation, thus can efficiently capture carbon dioxide.

In the second configuration, the management system for captured amount of carbon dioxide may further comprise a carbon dioxide capturing device installing an absorbing material in a state of being taken out of the wrapper, the carbon dioxide capturing device including a fan ventilating the absorbing material with a predetermined air volume, and a device-information storage unit in which information on the air volume is stored. The reading unit may be configured to read the information on the air volume from the device-information storage unit. When the information on the air volume is read by the reading unit, the deadline-determination unit may be configured to determine a capture deadline of carbon dioxide based on the predicted period, the information on the air volume, and the current date and time (Third Configuration).

According to the third configuration, forcible ventilation of the absorbing material by the carbon dioxide capturing device enhances the speed of capturing the carbon dioxide. Accordingly, even at the enhanced capturing speed of carbon dioxide, the deadline for capturing carbon dioxide can be appropriately determined based on the information on the air volume.

In the second or third configuration, the management system for captured amount of carbon dioxide may further comprise a concentration-detecting unit detecting a carbon dioxide concentration in the air before passing through the absorbing material, and a deadline-update unit changing the capture deadline determined by the deadline-determination unit based on the carbon dioxide concentration (Fourth Configuration).

According to the fourth configuration, the capture deadline once determined can be updated to a more accurate deadline in accordance with the detected carbon dioxide concentration. Thus, for example, when the carbon dioxide concentration is high, the timing for replacing the absorbing material can be shortened, and when the carbon dioxide concentration is low, the absorbing material still in an unsaturated state can be prevented from being replaced.

In any one of the second to fourth configurations, the information storage unit may further store an identification information of the absorbing material. The reading unit may be configured to read the identification information of the absorbing material from the information storage unit. The transmitting unit may be configured to transmit the absorbable capacity and the identification information of the absorbing material read by the reading unit to the server device in a state associated with the identification information of the first user. The management system for captured amount of carbon dioxide may further comprise a second information terminal that reads the absorbable capacity and the identification information of the absorbing material from the information storage unit, and transmits the read absorbable capacity and the identification information of the absorbing material to the server device in a state associated with the identification information of a second user who collects the absorbing material in an unsaturated state from the first user. The server device may be configured to store, in the database, the amount of carbon dioxide absorbed by the absorbing material from the received time period until the capture deadline of carbon dioxide as a captured amount of carbon dioxide by the second user, when the absorbable capacity in a state associated with the identification information of the second user and the identification information of the absorbing material are received before the capture deadline of carbon dioxide (Fifth Configuration).

According to the fifth configuration, even when the absorbing material in an unsaturated state is collected from the first user to the second user, the amount of carbon dioxide captured by the second user can be stored in the database.

In a fifth configuration, when the captured amount of carbon dioxide by the second user is stored in the database, the server device may be configured to perform a process of subtracting the captured amount of carbon dioxide by the second user from the captured amount of carbon dioxide by the first user in the database (Sixth Configuration).

According to the sixth configuration, the amount of carbon dioxide captured by the second user is prevented from being stored not only as the amount of carbon dioxide captured by the second user but also as the amount of carbon dioxide captured by the first user (i.e., prevented from being stored in duplicate). As a result, the amount (captured amount) of carbon dioxide absorbed by the absorbing material by the first user can be appropriately stored.

In any one of the second to sixth configurations, either the first information terminal or the server device may further include a storage-reuse time determining unit determining a storage-reuse time which is a time when the absorbing material is stored or a time when the absorbing material is reused, and which is a time after the capture deadline, based on the predicted period and the current date and time. The management system for captured amount of carbon dioxide may further comprise a storage-reuse time notification unit notifying the storage-reuse time (Seventh Configuration).

According to the seventh configuration, even when the absorbing material collected at the capture deadline is not actually saturated (unsaturated), it is possible to prevent the unsaturated absorbing material from being stored or reused by storing or reusing the absorbing material after the storage-reuse period, which is a period after the capture deadline. The term "reuse" includes, for example, producing another product from the captured absorbing material used as a law material.

In any one of the first to seventh configurations, the management system for captured amount of carbon dioxide may further comprise a casing disposed inside the wrapper and containing the absorbing material. The casing may include a first surface having a vent hole venting the inside of the casing in a state where the wrapper is unsealed, and a second surface without vent hole. The information storage unit may be disposed on the second surface (Eighth Configuration).

According to the eighth configuration, since the information storage unit does not hinder the ventilation, the absorbing material can be prevented from deterioration in efficiency of carbon dioxide absorption.

A management system for captured amount of carbon dioxide according to a ninth configuration is provided with a server device storing a captured amount of carbon dioxide by a user, the system comprises: an absorbing material which absorbs carbon dioxide in air; a wrapper which is provided with an absorbing material therein and is sealed so that air outside the absorbing material does not come into contact with the absorbing material; an information storage unit which is disposed inside the wrapper and contains an identification information of the absorbing material; a first information terminal including a reading unit reading the identification information read by the reading unit, and a transmitting unit transmitting the absorbable capacity read by the reading unit in associated with the identification information of the first user; wherein the information storage unit is disposed at a position where it is unreadable by the reading unit when the inside of the wrapper is sealed, and it is readable by the reading unit when the wrapper is unsealed; and the server device, referring to an absorbable capacity database in which the identification information of the absorbing material is associated with the absorbable capacity which is an amount of carbon dioxide absorbable by the absorbing material, reads an absorbable capacity associated with the identification information of the absorbing material received from the first information terminal and stores the absorbable capacity received as a captured amount of carbon dioxide by the first user. (Ninth Configuration).

According to the ninth configuration, it is possible to prevent the captured amount of carbon dioxide from being stored with an incorrect value.

In the ninth configuration, the absorbable capacity database may store the identification information of the absorbing material in a state in which the identification information is associated with the absorbable capacity and the predicted period until the absorbing material saturates. The server device may be configured to read the absorbable capacity and the predicted period associated with the identification information of the absorbing material received from the first information terminal with reference to the absorbable capacity database, and to store the read absorbable capacity in the database as a captured amount of carbon dioxide by the first user. Either the first information terminal or the server device may further include a deadline-determination unit determining a capture deadline of carbon dioxide based on the read predicted period and the current date and time. The first information terminal may further include a notification unit configured to notify a capture deadline of carbon dioxide determined by the deadline-determination unit (Tenth Configuration).

According to the tenth configuration, it is possible to notify the user of a deadline (capture deadline) at which the absorbing material is capable of capturing carbon dioxide. Accordingly, where the user replaces the absorbing material in accordance with the capture deadline, the user can replace the absorbing material shortly after saturation and capture carbon dioxide in an efficient way.

### [Explanation of Reference numerals]

10,210: management server device; 11, 211: control unit; 212: storage unit; 12a, 212a: program; 12b, 212b: database; 13: communication unit; 20, 120: first capturer terminal, 21: control unit, 23: display unit; 24: communication unit; 25: reading unit; 26: storage unit; 26a: application program; 60: air purifier; 61: absorbing material; 61a, 261b: two-dimensional code; 61b: wrapper; 62: control unit; 63: device-information storage unit; 64: informing unit; 65: fan; 67: reading unit; 68: housing; 80: absorption unit; 81: casing; 81a: vent; 81b: front; 81c: back; 81d: side; 100, 200: management system for captured amount of carbon dioxide; 120, 320: second capturer terminal; 121: control unit; 123: display unit; 124: communication unit; 125: reading section; 126: storage unit

## Claims

1. A management system for captured amount of carbon dioxide provided with a server device storing a captured amount of carbon dioxide by a user, the system comprises:
an absorbing material which absorbs carbon dioxide in air;
a wrapper which is provided with an absorbing material therein and is sealed so that air outside the absorbing material does not come into contact with the absorbing material;
an information storage unit which is disposed inside the wrapper and contains an absorbable capacity which is an amount of carbon dioxide absorbable by the absorbing material; and
a first information terminal including a reading unit reading an absorbable capacity from the information storage unit, and a transmitting unit transmitting the absorbable capacity read by the reading unit in associated with the identification information of a first user;
wherein the information storage unit is disposed at a position where it is unreadable by the reading unit when the inside of the wrapper is sealed, and it is readable by the reading unit when the wrapper is unsealed; and
the server device stores an absorbable capacity received from the first information terminal as a captured amount of carbon dioxide by the first user.

2. The management system for captured amount of carbon dioxide according to claim 1,
wherein the information storage unit further stores a predicted period until which the absorbing material saturates,
the reading unit reads the predicted period from the information storage unit,
either the first information terminal or the server device further includes a deadline-determination unit determining a capture deadline of carbon dioxide based on the predicted period and a current date and time, and
the first information terminal further includes a notification unit configured to notify a capture deadline of the carbon dioxide determined by the deadline-determination unit.

3. The management system for captured amount of carbon dioxide according to claim 2, further comprising a carbon dioxide capturing device installing an absorbing material in a state taken out of the wrapper, the carbon dioxide capturing device including a fan ventilating the absorbing material with an air volume predetermined, and a device-information storage unit in which the information of the air volume is stored,
wherein the reading unit reads information of the air volume from the device-information storage unit, and
the deadline-determination unit determines a capture deadline of carbon dioxide based on the predicted period, the information on the air volume, and the current date and time, when the information on the air volume is read by the reading unit.

4. The management system for captured amount of carbon dioxide according to claim 2 or 3, further comprising: a concentration-detecting unit detecting a concentration of carbon dioxide in the air before passing through the absorbing material, and
a deadline-update unit changing the capture deadline determined by the deadline-determination unit based on the carbon dioxide concentration.

5. The management system for captured amount of carbon dioxide according to claim 2 or 3, further comprising a second information terminal,
wherein the information storage unit further stores identification information of the absorbing material,
the reading unit reads identification information of the absorbing material from the information storage unit.
the transmitting unit transmits the absorbable capacity and the identification information of the absorbing material read by the reading unit to the server device in a state associated with the identification information of the first user,
the server device stores the absorbable capacity and the identification information of the absorbing material received from the first information terminal in the database in a state associated with the identification information of the first user,
the second information terminal reads the absorbable capacity and the identification information of the absorbing material received from the information storage unit, and transmits the read absorbable capacity and the identification information of the absorbing material to the server device in a state associated with the identification information of a second user who collects the absorbing material in an unsaturated state from the first user, and
the server device stores, in the database, the amount of carbon dioxide absorbed by the absorbing material from the received time period until the capture deadline of carbon dioxide as a captured amount of carbon dioxide by the second user, when the absorbable capacity in a state associated with the identification information of the second user and the identification information of the absorbing material are received before the capture deadline of carbon dioxide.

6. The management system for captured amount of carbon dioxide according to claim 5, wherein the server device performs a process of subtracting the captured amount of carbon dioxide by the second user from the captured amount of carbon dioxide by the first user in the database when the captured amount of carbon dioxide of the second user is stored in the database.

7. The management system for captured amount of carbon dioxide according to claim 2, wherein either the first information terminal or the server device further includes a storage-reuse time determining unit determining, based on the predicted period and the current date and time, a storage-reuse time which is a time when the absorbing material is stored or a time when the absorbing material is reused, and which is a time after the capture deadline, and
the management system for captured amount of carbon dioxide further comprises a storage-reuse time notification unit notifying the storage-reuse time.

8. The management system for captured amount of carbon dioxide according to claim 1, further comprising a casing disposed inside the wrapper and containing the absorbing material, the casing including a first surface having a vent hole venting the inside of the casing in a state where the wrapper is unsealed, and a second surface without vent hole,
wherein the information storage unit is disposed on the second surface.

9. A management system for captured amount of carbon dioxide provided with a server device storing a captured amount of carbon dioxide by a user, the system comprises:
an absorbing material which absorbs carbon dioxide in air;
a wrapper which is provided with an absorbing material therein and is sealed so that air outside the absorbing material does not come into contact with the absorbing material;
an information storage unit which is disposed inside the wrapper and contains an identification information of the absorbing material; and
a first information terminal including a reading unit reading the identification information read by the reading unit, and a transmitting unit transmitting the absorbable capacity read by the reading unit in associated with the identification information of the first user;
wherein the information storage unit is disposed at a position where it is unreadable by the reading unit when the inside of the wrapper is sealed, and it is readable by the reading unit when the wrapper is unsealed; and
the server device, referring to an absorbable capacity database in which the identification information of the absorbing material is associated with the absorbable capacity which is an amount of carbon dioxide absorbable by the absorbing material, reads an absorbable capacity associated with the identification information of the absorbing material received from the first information terminal and stores the absorbable capacity received as a captured amount of carbon dioxide by the first user.

10. The management system for captured amount of carbon dioxide according to claim 9, wherein the absorbable capacity database stores the identification information of the absorbing material in a state in which the identification information is associated with the absorbable capacity and the predicted period until the absorbing material saturates,
the server device reads the absorbable capacity and the predicted period associated with the identification information of the absorbing material received from the first information terminal with reference to the absorbable capacity database, and stores the read absorbable capacity in the database as a captured amount of carbon dioxide by the first user,
either the first information terminal or the server device further includes a deadline-determination unit determining a capture deadline of carbon dioxide based on the read predicted period and the current date and time, and
the first information terminal further includes a notification unit configured to notify a capture deadline of carbon dioxide determined by the deadline-determination unit.
